(19) Europäisches Patentamt
European Patent Office
Office européen des brevets

(11) EP 2 610 271 B1

(12) **EUROPEAN PATENT SPECIFICATION**

(45) Date of publication and mention of the grant of the patent:
**20.03.2019 Bulletin 2019/12**

(51) Int Cl.:
***C08F 10/06*** *(2006.01)*

(21) Application number: **11196162.9**

(22) Date of filing: **30.12.2011**

# (54) Preparation of phthalate free ZN PP catalysts

Herstellung von phthalatfreien ZN-PP-Katalysatoren

Préparation de catalyseurs ZN PP sans phthalate

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**03.07.2013 Bulletin 2013/27**

(73) Proprietor: **Borealis AG**
**1220 Vienna (AT)**

(72) Inventors:
- **Denifl, Peter**
  **00990 Helsinki (FI)**
- **Leinonen, Timo**
  **06750 Tolkkinen (FI)**

(74) Representative: **Lux, Berthold**
**Maiwald Patentanwalts- und Rechtsanwaltsgesellschaft mbH**
**Elisenhof**
**Elisenstraße 3**
**80335 München (DE)**

(56) References cited:
**EP-A1- 0 743 326**
**EP-A1- 2 415 790**
**US-A- 4 499 194**
**US-B1- 7 067 451**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The present invention relates to a new process for the preparation of new particulate olefin polymerisation catalyst components as well as the use of said new catalyst components for preparing a catalyst used in polymerisation processes.

## Background of the invention

Ziegler-Natta (ZN) type polyolefin catalysts are well known in the field of polymers, generally, they comprise (a) at least a catalyst component formed from a transition metal compound of Group 4 to 6 of the Periodic Table (IUPAC, Nomenclature of Inorganic Chemistry, 1989), a metal compound of Group 1 to 3 of the Periodic Table (IUPAC), and, optionally, a compound of group 13 of the Periodic Table (IUPAC) and/or an internal donor compound. ZN catalyst may also comprise (b) further catalyst component(s), such as a cocatalyst and/or an external donor.
Various methods for preparing ZN catalysts are known in the state of art. In one known method, a supported ZN catalyst system is prepared by impregnating the catalyst components on a particulate support material. In WO-A-01 55 230, the catalyst component(s) are supported on a porous, inorganic or organic particulate carrier material, such as silica.
In a further well known method the carrier material is based on one of the catalyst components, e.g. on a magnesium compound, such as $MgCl_2$. This type of carrier material can also be formed in various ways. EP-A-713 886 of Japan Olefins describes the formation of $MgCl_2$ adduct with an alcohol which is then emulsified and finally the resultant mixture is quenched to cause the solidification of the droplets.
Alternatively, EP-A-856 013 of BP discloses the formation of a solid Mg-based carrier, wherein the Mg-component containing phase is dispersed to a continuous phase and the dispersed Mg-phase is solidified by adding the two-phase mixture to a liquid hydrocarbon.
The formed solid carrier particles are normally treated with a transition metal compound and optionally with other compounds for forming the active catalyst.
Accordingly, in case of external carriers, some examples of which are disclosed above, the morphology of the carrier is one of the defining factors for the morphology of the final catalyst.
One disadvantage encountered with the supported catalyst systems is that distribution of the catalytically active compounds on the support material is highly dependent on the support particle structure, like compactness of the support particles, porosity and pore size distribution. As a result this may often lead to non-uniform distribution of the active component(s) within the catalyst particle. As a consequence of the uneven distribution of the active sites in catalyst particles catalysts with intra-particle in-homogeneities, as well inter-particle in-homogeneities between separate particles are obtained, which leads finally to inhomogeneous polymer material.
Further, support material will remain in the final polymer as a residue, which might be harmful in some polymer applications.
WO-A-00 08073 and WO-A-00 08074 describe further methods for producing a solid ZN catalyst, wherein a solution of an Mg-based compound and one or more further catalyst compounds are formed and the reaction product thereof is precipitated out of the solution by heating the system. Furthermore, EP-A-926 165 discloses another precipitating method, wherein a mixture of $MgCl_2$ and Mg-alkoxide is precipitated together with a Ti-compound to give a ZN catalyst.
According to US 2005/0176900 a magnesium compound, an alcohol, an ether, a surfactant and an alkyl silicate are reacted first to get a catalyst support, which is then further reacted with a titanium compound. The solid titanium catalyst component is obtained via precipitation. The catalyst component further comprises an internal donor, which can be selected form a great variety of compounds.
WO 03/000757 as well WO 03/000754 describe a process for the preparation of an olefin polymerisation catalyst component, enabling to prepare solid particles of a catalyst component comprising a group 2 metal together with a transition metal however without using any external carrier material or without using conventional precipitation methods, but using so called emulsification-solidification method for producing solid catalyst particles. In this process a phthalate type internal electron donor is prepared in situ during the catalyst preparation in a way and using chemicals so that an emulsion is formed. Droplets of the dispersed phase of the emulsion form the catalyst component, and solidifying the droplets results in solid particulate catalyst.
WO 2004/029112 discloses a further modification of the emulsion-solidification method as described in WO 03/000757 as well WO 03/000754, and relates thus to process for preparing an olefin polymerisation catalyst component, wherein the process is further characterized in that a specific aluminum alkyl compound is brought into contact with the catalyst component, enabling a certain degree of activity increase at higher temperatures.
Accordingly, although much development work has been done in the field of Ziegler-Natta catalysts, there remains a need for alternative or improved methods of producing ZN catalysts with desirable properties.
Thus it would be highly advantageous if a process for preparing solid olefin polymerisation catalyst components would be available which allows the formation of said solid catalyst components in different ways, like via precipitation

or emulsion/solidification method, depending on the desired properties of the catalyst particles, i.e. desired morphology and/or particle size, whereby no gel-like material is formed during catalyst preparation and whereby the produced catalyst results in desired polymer properties, like melt flow rate, xylene soluble content, etc.. In case of propylene-ethylene random polymers being produced, randomness is one essential feature effecting the polymer properties.

A further aspect of the present invention is the desire to avoid as far as possible the use of substances which are considered as potential harmful compounds regarding health as well as environmental aspects. One class of substances which have been considered as potential harmful compounds is phthalates, which have been commonly used as internal electron donors in Ziegler-Natta type catalysts. Although the amount of these phthalate compounds, used as internal donors in catalysts, in the final polymer is very small, it is still desirable to find out alternative compounds to replace phthalate compounds and still get catalysts having good activity, excellent morphology resulting in the desired polymer properties.

Use of non-phthalate donors is as such not new in ZN catalysts. However, such donors are mainly used in catalysts, which are prepared by supporting the catalyst components on an external carrier. Drawbacks of such catalysts are described above.

Until now it has not been possible to form an emulsion just by changing a donor or donor precursor, due to the very sensitive nature of emulsion formation in this catalyst preparation method. Also the precipitation behaviour is significantly effected by the used donor by effecting the solubility of the Mg compounds via formation of a Mg complex. Thus for both methods the conditions for forming an emulsion respectively for precipitation depending on the chosen donor are not obvious for an art skilled person.

Accordingly it is one object of the present invention to provide a catalyst component having desired chemical composition and particle size. In addition the catalyst component has desired morphology.

Accordingly it is one further object of the present invention to provide a method for preparing solid catalyst components which allows the formation of the catalyst components in different ways (e.g. precipitation or emulsion/solidification method) but with a common mechanism and which further does not require the use of phthalates as internal electron donor, yielding catalyst components of desired chemical composition, morphology and particle size, which are suitable for producing polymers with the desired polymer properties.

Further, it is an object of the invention to provide a catalyst as herein described for use in olefin polymerisation.

Surprisingly these objects could be solved by the use of an alcohol mixture comprising a monohydric alcohol (A) and an alcohol (B) comprising in addition to the hydroxyl moiety at least one ether moiety during preparation of the solid catalyst components.

It has been surprisingly found that the use of such an alcohol mixture during the preparation of the catalyst components yields catalysts which show a significant increase in catalyst activity compared to other ZN-catalysts prepared without the use of such a mixture.

## Description of the invention

Accordingly the present invention provides the process for preparing for preparing an olefin polymerisation catalyst component as defined in claim 1 and claim 4.

A process for preparing an olefin polymerisation catalyst component in the form of solid particles comprises the steps of

a)

$a_1$) providing a solution of at least a first alkoxy compound (Ax) being the reaction product of a Group 2 metal compound and an alcohol mixture of a monohydric alcohol (A) of formula ROH, with R being $C_6$-$C_{10}$ alkyl and an alcohol (B) comprising in addition to the hydroxyl moiety at least one ether moiety, optionally in an organic liquid reaction medium; or

$a_2$) providing a solution of an alkoxy compound mixture of at least a first alkoxy compound (Ax) being the reaction product of a Group 2 metal compound and a monohydric alcohol (A) of formula ROH, with R being $C_6$-$C_{10}$ alkyl, optionally in an organic liquid reaction medium and at least a second alkoxy compound (Bx) being the reaction product of a Group 2 metal compound and an alcohol (B) comprising in addition to the hydroxyl moiety at least one ether moiety, optionally in an organic liquid reaction medium; and

b) adding said solution to at least one compound of a transition metal and

c) preparing the solid catalyst component particles,

wherein an internal electron donor selected from benzoates, alkylene glycol dibenzoates, maleates and 1,3-diethers, or a mixture of any selected donors, or a corresponding precursor is added at any step prior to step c).

Preferred embodiments are described in dependent claims as well in the following description. Further, the present invention provides the catalyst components obtainable in accordance with the present invention and further use of the catalyst components in the olefin polymerisation.

The invention will be described in the following in greater detail, referring to the particular preferred embodiments. Essential in all embodiments is that solid catalyst can be prepared via liquid/liquid two-phase (emulsion) system - solidification method or via precipitation method without the need of using phthalate compounds leading to catalyst particles having desired physical properties, e.g. especially desired morphological properties and/or desired particle size and particle size distribution.

It has been surprisingly found by the inventors of the present invention that catalyst component particles having in embodiments desired morphology and/or particle size and/or particle size distribution and high activity can be obtained by the emulsion-solidification or precipitation way of preparing Ziegler-Natta (ZN) type catalysts, which are suitable for use in olefin polymerisation, in particular for propylene polymerisation, but not requiring the use of phthalates. According to the replica effect, the polymer particles produced by using the inventive catalyst have desired morphological properties, too.

The inventive catalyst preparation is based on a liquid/liquid two-phase system (emulsion/solidification method) or on a precipitation method where no separate external carrier materials such as silica or $MgCl_2$ are needed in order to get solid catalyst particles.

This process for preparing solid catalyst particles is in particular characterized in that the formation of the catalyst component comprises $a_1$) use of at least one alkoxy compound (Ax) being the reaction product of at least one compound of Group 2 metal and an alcohol mixture of a monohydric alcohol (A) and an alcohol (B) comprising in addition to the hydroxyl moiety at least one ether moiety or $a_2$) use of a alkoxy compound mixture of at least one alkoxy compound (Ax) being the reaction product of at least one compound of Group 2 metal and a monohydric alcohol (A) and an alkoxy compound (Bx) being the reaction product of a Group 2 metal compound and an alcohol (B) comprising in addition to the hydroxyl moiety at least one ether moiety and further characterized that phthalate free internal electron donor is used in the catalyst preparation as such or formed in situ.

Especially preferred is variant $a_2$) using alkoxy compound mixtures.

The alkoxy compounds (Ax and Bx) can be prepared *in situ in* the first step of the catalyst preparation process by reacting said compounds of Group 2 metal with the alcohol or alcohol mixture as described above, or said alkoxy compounds can be separately prepared reaction products, or they can be even commercially available as ready compounds and used as such in the catalyst preparation process of the invention.

During preparation of the alkoxy compounds (Ax or Bx) from the at least one compound of Group 2 metal and the alcohol or alcohol mixture as defined above, a donor or a donor precursor can be added into the reaction mixture, whereby a Group 2 metal complex (Complex Ac or Bc) is formed, which is defined in this application to be a complex of at least the Group 2 metal compound, the alcohol or alcohol mixture and a donor.
If the alkoxy compounds (Ax) and/or (Bx) are formed without using any donor(s) or donor precursor(s), donor(s) as such is added separately to the reaction product solution or during preparation of the catalyst component.

Compounds of Group 2 metal are selected from the group comprising, preferably consisting of Group 2 metal dialkyls, alkyl Group 2 metal alkoxides, alkyl Group 2 metal halides and Group 2 metal dihalides. It can further be selected from the group consisting of dialkyloxy Group 2 metal, diaryloxy Group 2 metal, alkyloxy Group 2 metal halides, aryloxy Group 2 metal halides, alkyl Group 2 metal alkoxides, aryl Group 2 metal alkoxides and alkyl Group 2 metal aryloxides. Preferably Group 2 metal is magnesium.

Monohydric alcohols (A) are those of formula ROH in which R is a linear or branched $C_6$-$C_{10}$ alkyl group, preferably a branched $C_8$ alkyl group.

Preferred monohydric alcohols include hexanol, 2-ethyl-1-butanol, 4-methyl-2-pentanol, 1-heptanol, 2-heptanol, 4-heptanol, 2,4-dimethyl-3-pentanol, 1-octanol, 2-octanol, 2-ethyl-1-hexanol, 1-nonanol, 5-nonanol, diisobutyl carbinol, 1-decanol and 2,7-dimethyl-2-octanol. The most preferred monohydric alcohol is 2-ethyl-1-hexanol.

The alcohol (B) comprising at least one ether moiety is an aliphatic compound. The aliphatic compounds may be linear, branched or cyclic or any combination thereof and in particular preferred alcohols are those comprising only one ether moiety.

Illustrative examples of such preferred ether moiety containing alcohols (B) to be employed in accordance with the present invention are glycol monoethers, in particular $C_2$ to $C_4$ glycol monoethers, such as ethylene or propylene glycol monoethers wherein the ether moieties comprise from 2 to 18 carbon atoms, preferably from 2 to 12 carbon atoms and more preferably 2 to 8 carbon atoms. Preferred monoethers are $C_2$ to $C_4$ glycol monoethers and derivatives thereof. According to the present invention, alcohols (B) are selected form the group consisting of ethylene glycol butyl ether, ethylene glycol hexyl ether, ethylene glycol 2-ethylhexyl ether, propylene glycol n-butyl ether, propylene glycol methyl ether, propylene glycol ethyl ether, propylene glycol n-hexyl ether, propylene glycol 2-ethylhexyl ether, with ethylene glycol hexyl ether, 1,3-propylene glycol ethyl ether and 1,3-propylene glycol n-butyl ether, being particularly preferred.

The most preferred alcohols (B) are 1,3-propylene glycol ethyl ether and 1,3-propylene glycol n-butyl ether.

Usually the different alkoxy compounds or alcohols are employed in a mole ratio of from 10:1 to 1:10, preferably this mole ratio is from 8:1 to 1:8, more preferably 6:1 to 1:6, even more preferably 5:1 to 1:5 and in embodiments also 4:1 to 1:4 or even 2:1 to 1:2. This ratio can be adjusted depending on the used donor e.g. donors with short chains require longer chain alcohols and vice versa.

The reaction for the preparation of the alkoxy compounds (Ax) and (Bx) may in embodiments, be carried out preferably in an aromatic or aromatic/aliphatic medium at a temperature of 20° to 80°C, and in case that the Group 2 metal is magnesium, the preparation of the alkoxy magnesium compound may be carried out at a temperature of 50° to 70°C.

The reaction medium used as solvent can be aromatic or a mixture of aromatic and aliphatic hydrocarbons, the latter one containing 5 - 20 carbon atoms, preferably 5 - 16 carbon atoms more preferably 5 - 12 carbon atoms and most preferably 5 to 9 carbon atoms. Preferably, the aromatic hydrocarbon is selected substituted and unsubstituted benzenes, preferably from alkylated benzenes, even more preferably from toluene and xylenes, and is most preferably toluene.

The molar ratio of said reaction medium to magnesium is preferably less than 10, for instance from 4 to 10, preferably from 5 to 9.

Alkoxy compounds (Ax) and (Bx) are preferably alkoxy magnesium compounds.

The alkoxy magnesium compound group is preferably selected from the group consisting of magnesium dialkoxides, complexes of a magnesium dihalide and an alcohol, and complexes of a magnesium dihalide and a magnesium dialkoxide, or mixtures therefrom. More preferably the alkoxy magnesium compound is a magnesium dialkoxide compound.

The alkoxy magnesium compound is the reaction product of an alcohol (A) respectively alcohol (B) or a mixture of alcohol (A) and alcohol (B) with a magnesium compound selected from the group consisting of dialkyl magnesiums, alkyl magnesium alkoxides, alkyl magnesium halides and magnesium dihalides. It can further be selected from the group consisting of dialkyloxy magnesiums, diaryloxy magnesiums, alkyloxy magnesium halides, aryloxy magnesium halides, alkyl magnesium alkoxides, aryl magnesium alkoxides and alkyl magnesium aryloxides.

The magnesium dialkoxide is preferably the reaction product of dialkyl magnesium of the formula $R_2Mg$, wherein each one of the two Rs is a similar or different $C_1$-$C_{20}$ alkyl, preferably a similar or different $C_2$-$C_{10}$ alkyl, and alcohol (A) and/or (B).

Typical magnesium alkyls are ethylbutyl magnesium, dibutyl magnesium, dipropyl magnesium, propylbutyl magnesium, dipentyl magnesium, butylpentylmagnesium, butyloctyl magnesium and dioctyl magnesium. Most preferably, one R of the formula $R_2Mg$ is a butyl group and the other R is an ethyl or octyl group, i.e. the dialkyl magnesium compound is butyl octyl magnesium or ethyl butyl magnesium.

Typical alkyl-alkoxy magnesium compounds RMgOR, when used, are ethyl magnesium butoxide, butyl magnesium pentoxide, octyl magnesium butoxide and octyl magnesium octoxide.

Most preferably alkoxy compound (Ax) is obtained by reacting dialkyl magnesium of formula $R_2Mg$, with R being a different $C_2$-$C_8$-alkyl, even more preferred by reacting butyl octyl magnesium or ethyl butyl magnesium with 2-ethyl hexanol and alkoxy compound (Bx) is obtained by reacting dialkyl magnesium of formula $R_2Mg$, with R being a different $C_2$-$C_8$-alkyl, even more preferred by reacting butyl octyl magnesium or ethyl butyl magnesium with a $C_2$ or $C_3$-alkyl glycol $C_2$-$C_8$-alkyl ether, even more preferred with 1,3-propylene glycol ethyl ether or 1,3-propylene glycol n-butyl ether, whereby the molar ratio of monohydric alcohol (A) like 2-ethyl hexanol to alcohol (B) like 1,3-propylene glycol ethyl ether or 1,3-propylene glycol n-butyl ether is in the range of 6:1 to 1:6, preferably 5:1 to 1:5 and most preferably 4:1 to 1:4.

The phthalate free electron donor compound used in the preparation of the catalyst of the present invention are selected from:

a) benzoates of the formula (I)

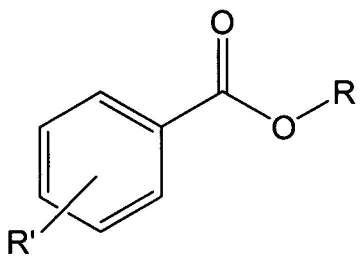

with R being a linear or branched $C_1$-$C_{12}$-alkyl group, preferably a linear or branched $C_2$-$C_{10}$-alkyl group, more

preferably a linear or branched $C_4$-$C_9$-alkyl group and most preferably a branched $C_6$-$C_8$-alkyl group, like 2-ethylhexyl, and
R' being H or a linear or branched $C_1$-$C_{12}$-alkyl group, preferably a linear or branched $C_2$-$C_{10}$-alkyl group more preferably a linear or branched $C_4$-$C_8$-alkyl group, like tert.-butyl or n-hexyl, whereby the alkyl group can contain one or more heteroatoms selected from O, N or S, preferably O or N, more preferably O, in the alkyl chain, or can be substituted by one or more substituents selected from =O, halogen, like chlorine, fluorine or bromine, or optionally substituted $C_6$-$C_{14}$-aryl.

The $C_6$-$C_{14}$-aryl group is preferably a phenyl group, the optional substituents on the aryl group can be linear or branched $C_1$-$C_{12}$-alkyl, preferably linear or branched $C_1$-$C_{10}$-alkyl and more preferably linear or branched $C_1$-$C_8$-alkyl or halogen, like chlorine, fluorine or bromine, preferably chlorine or bromine and more preferably chlorine. The number of substituents on the aryl group can be 0 to 4, preferably 0 to 2, more preferably 0 or 1.
R' being not H can be in ortho- meta or para position, preferably in para or ortho-position.
More preferred compounds are 2-ethylhexyl benzoate, 2-ethylhexyl (4-n-hexylbenzoate), 2-ethylhexyl (4-tert.-butylbenzoate), 2-ethylhexyl ((2-(4-chlorobenzoyl)benzoate).

b) alkylene glycol dibenzoates selected from the group consisting of ethylene glycol dibenzoate, 1,2-propylene glycol dibenzoate and 1,3-propylene glycol dibenzoate.

c) maleates of formula (III)

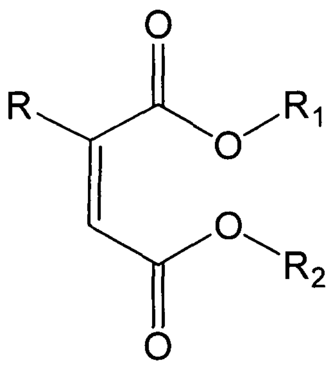

with $R_1$ and $R_2$ being the same or different and being a linear or branched $C_1$-$C_{12}$-alkyl group, preferably a linear or branched $C_1$-$C_8$-alkyl group, more preferably a linear or branched $C_1$-$C_4$-alkyl group and most preferably ethyl, whereby $R_1$ and $R_2$ are preferably the same and
with R being H or a linear, branched or cyclic $C_3$ to $C_{12}$-alkyl, preferably a branched or cyclic $C_3$ to $C_8$-alkyl, like iso-butyl, cyclopentyl or cyclohexyl, whereby it is preferred that R is not H.

More preferred compounds are diethyl-2-isobutyl maleate, diethyl-2-cyclopentyl maleate and diethyl-2-cyclohexyl maleate.

d) 1,3-diethers of formula (V) or (VI)

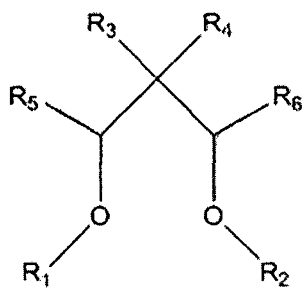 (V) or 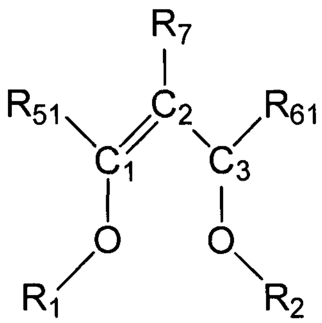 (VI)

wherein in formula (V) and (VI)

$R_1$ and $R_2$ are the same or different and can be a linear or branched $C_1$-$C_{12}$-alkyl, or $R_1$ with $R_5$ and/or $R_2$ with $R_6$ can form a ring with 4 to 6 C-atoms,

$R_3$ and $R_4$ of formula (V) are the same or different and can be H or a linear or branched $C_1$-$C_{12}$-alkyl or $R_3$ and $R_4$ can form together a ring with 5 to 10 C-atoms, which can be part of an aliphatic or aromatic polycyclic ring system with 9 to 20 C atoms,

$R_5$ and $R_6$ in formula (V) are the same or different and can be H or a linear or branched $C_1$-$C_{12}$-alkyl or can form together an aliphatic ring with 5 to 8 C-atoms,

and $R_{51}$, $R_{61}$ and $R_7$ in formula (VI) are the same or different and can be H or a linear or branched $C_1$-$C_{12}$-alkyl or two or three of $R_{51}$, $R_{61}$ and $R_7$ can form together with $C_1$ to $C_3$ an aromatic ring or ring system with 6 to 14 C-atoms, preferably 10 to 14 C-atoms.

$R_1$ and $R_2$ are preferably the same in formula (V) and (VI) and can be a linear or branched $C_1$-$C_{10}$-alkyl, more preferably $C_1$-$C_8$-alkyl, like methyl, ethyl, n-propyl, i-propyl, n-butyl or tert.-butyl or 2-ethylhexyl.

In formula (V) is further possible that $R_1$ with $R_5$ and/or $R_2$ with $R_6$ can form together with the oxygen atom a ring with 4 to 6 C-atoms, preferably 4 to 5 C-atoms, like a tetrahydrofuran ring or a tetrahydropyrane ring.

$R_3$ is preferably a linear or branched $C_1$-$C_{10}$-alkyl, more preferably a $C_1$-$C_9$-alkyl, like methyl, ethyl, i-propyl, i-butyl or n-nonyl.

$R_4$ is preferably H or a linear or branched $C_1$-$C_{10}$-alkyl, more preferably a $C_1$-$C_6$-alkyl, like methyl, i-propyl, n-butyl, i-butyl, i-pentyl.

It is also possible that $R_3$ and $R_4$ can form together a ring, preferably an alicyclic ring with preferably 5 to 7 C-atoms, more preferably 5 to 6 C-atoms, like cyclopentan, 2- or 3-cyclopenten, cyclohexene, 2- or 3- or 4-cyclohexene.

It is further possible that this ring is part of an alicyclic or aromatic polycyclic ring system with 9 to 18 C-atoms, like decaline, hydroindane, fluorene or indane.

$R_5$ in formula (V) can be preferably H or a linear or branched $C_2$-$C_8$-alkyl, more preferably can be H or $C_2$-$C_6$-alkyl and most preferably H.

$R_6$ in formula (V) can be preferably H or a linear or branched $C_2$-$C_8$-alkyl, preferably H or a linear $C_3$-$C_6$-alkyl, like i-propyl or i-butyl.

In formula (V) it is further possible that $R_5$ and $R_6$ can form together an aliphatic ring with 5 to 8 C-atoms, like cyclopentan, cyclohexene or cycloheptane.

In formula (VI) $R_{51}$, $R_{61}$ and $R_7$ are the same or different and are preferably H or a linear or branched $C_1$-$C_{10}$-alkyl, more preferably H or a linear or branched $C_1$-$C_8$-alkyl like methyl, i-propyl, n-butyl, i-butyl, i-pentyl.

In formula (VI) it is further possible that two or three of $R_{51}$, $R_{61}$ and $R_7$ form together with $C_1$ to $C_3$ an aromatic ring or ring system with 6 to 14 C-atoms, preferably 10 to 14 C-atoms. Such aromatic rings or ring systems are phenyl, naphthalene, anthracene or phenanthrene. Preferably such ring system is naphthalene.

More preferred compounds are 1,8-bis(2-ethylhexyloxy)naphthalene, 3,3-bis(ethoxymethyl)-2-methyldodecane and 3,3-bis(ethoxymethyl)-2,6-dimethylheptane.

Most preferably the phthalate free internal donors are selected from ethylene glycol dibenzoate, 1,2-propylene glycol dibenzoate and 1,3-propylene glycol dibenzoate, diethyl-2-isobutyl maleate, diethyl-2-cyclopentyl maleate and diethyl-2-cyclohexyl maleate or mixtures therefrom.

The compound of a transition metal is preferably a compound of a Group 4 metal. The Group 4 metal is preferably titanium, and its compound to be reacted with the complex of a Group 2 is preferably a halide. Equivalent to titanium tetrahalide is the combination of an alkoxy titanium halide and a halogenation agent therefore, which are able to form a titanium tetrahalide *in situ.* The most preferred halide is the chloride.

In a further embodiment of the invention, a compound of a transition metal used in the process can also contain organic ligands typically used in the field known as a single site catalyst.

In a still further embodiment of the invention, a compound of a transition metal can also be selected from Group 5 metals, Group 6 metals, Cu, Fe, Co, Ni and/or Pd compounds.

In principle said olefin polymerisation catalyst components can be obtained in several ways all based on the same mechanism.

In one embodiment the preparation of the catalyst component in form of solid particles comprises the steps of

(a1)

(a1-1) providing a solution (S1) of at least a first alkoxy compound (Ax) being the reaction product of a Group 2 metal compound and an alcohol mixture of a monohydric alcohol (A) of formula ROH, with R being $C_6$-$C_{10}$

alkyl and an alcohol (B) comprising in addition to the hydroxyl moiety at least one ether moiety, optionally in an organic liquid reaction medium; or

(a1-2) providing a solution (S1) of an alkoxy compound mixture of at least a first alkoxy compound (Ax) being the reaction product of a Group 2 metal compound and a monohydric alcohol (A) of formula ROH, with R being $C_6$-$C_{10}$ alkyl, optionally in an organic liquid reaction medium and at least a second alkoxy compound (Bx) being the reaction product of a Group 2 metal compound and an alcohol (B) comprising in addition to the hydroxyl moiety at least one ether moiety, optionally in an organic liquid reaction medium;

and an internal donor as described above, or a mixture therefrom, or a precursor thereof in an organic liquid reaction medium; and

(b1) combining said solution (S1) with at least one transition metal compound (CT),
(c1) precipitating said catalyst component in the form of a solid particle, and
(d1) recovering the solidified particles of the olefin polymerisation catalyst component.

In step (a1) it is possible to use an alkoxy compound (Ax) being a reaction product of at least one Group 2 metal compound and a mixture of alcohol (A) with alcohol (B) as defined above. (a1-1)
The second possibility (a1-2) is to use a mixture of an alkoxy compound (Ax) being a reaction product of at least one Group 2 metal compound and a monohydric alcohol (A) and an alkoxy compound (Bx) being a reaction product of at least one Group 2 metal compound and an alcohol (B), as defined above.
Possibility (a1-2) is preferred.

It is possible to dissolve the transition metal compound (CT) in step (b1) in an organic liquid reaction medium (OM2), whereby solution (S2) is formed.

The process of solids precipitation can be carried out by several methods:
In one embodiment the addition of solution (S1) to the at least one transition metal compound (CT) in step (b1) is done at a temperature of at least 50 °C, preferably in the temperature range of 50 to 110 °C, more preferably in the range of 70 to 100 °C, most preferably in the range of 85 to 95 °C, at which temperature the at least one transition metal compound (CT) is in a liquid form, resulting in the precipitation of said solid catalyst components.

In this case it is especially appreciated that after having combined the solution (S1) with at least one transition metal compound the whole reaction mixture is kept at least at 50 °C, more preferably is kept in the temperature range of 50 to 110 °C, more preferably in the range of 70 to 100 °C, most preferably in the range of 85 to 95 °C, to secure full precipitation of the catalyst component in form of a solid particle.

In this case it is possible that a surfactant is added in step (a1) or step (b1).

General examples of surfactants include polymer surfactants, such as poly(alkyl methacrylate) and poly(alkyl acrylate), and the like. A polyalkyl methacrylate is a polymer that may contain one or more methacrylate monomers, such as at least two different methacrylate monomers, at least three different methacrylate monomers, etc. Moreover, the acrylate and methacrylate polymers may contain monomers other than acrylate and methacrylate monomers, so long as the polymer surfactant contains at least about 40% by weight acrylate and methacrylate monomers.

Examples of surfactants that are commercially available include those under the trade marks VISCOPLEX(R) available from RohMax Additives, GmbH, especially those having product designations 1-254, 1-256 and those under the trade designations CARBOPOL(R) and PEMULEN(R) available from Noveon/Lubrizol.

In a second embodiment the solution (S1) is mixed with at least one transition metal compound (CT) in liquid form at a temperature of about -20°C to about 30°C and precipitating the solid catalyst components by subsequently slowly raising the temperature to at least 50 °C, preferably in the temperature range of 50 to 110 °C, more preferably in the range of 70 to 100 °C, most preferably in the range of 85 to 95 °C, whereby the rate of temperature increase is in the range from 0.1 °C to 30°C per minute, preferably 0.5 to 10°C per minute.

In this case it is especially appreciated that a surfactant is added to the solution (S1) before step (b1). Suitable surfactants are described above.

In both cases it is possible, but not necessary, to add some precipitating agent into the system. Such precipitating agents are able to effect morphology of the particles formed during the precipitation step. In a specific process no precipitating agent has been used. A precipitating agent according to this invention is an agent which promotes the precipitation of the catalyst component in form of a solid particle. The organic liquid medium used as (OM2), as defined later in this application, can promote the precipitating and thus act and used as a precipitating agent. However, the final catalyst does not contain any such medium. Moreover it is preferred that no precipitating agent has been used in the process as stated above.

Preferably, the catalyst component as prepared in the previous paragraphs is a precipitated solid particle.
"Precipitation" according to this invention means that during the catalyst component preparation a chemical reaction in a solution takes place leading to the desired catalyst component insoluble in said solution.

Suitable alkoxy compounds (Ax) and (Bx) and their preparation have been described above.

Suitable electron donors and their precursors as well as suitable transition metal compounds are also described above.

Preferably TiCl4 is used as transition metal compound.

If the electron donor is used as such, it is added to the alkoxy compound (Ax) or alkoxy compound (Bx), whereby the reaction medium used as solvent for the Group 2 metal compound can be aromatic or a mixture of aromatic and aliphatic hydrocarbons, the latter one containing 5 - 20 carbon atoms, preferably 5 - 16 carbon atoms more preferably 5 - 12 carbon atoms and most preferably 5 to 9 carbon atoms. Preferably, the aromatic hydrocarbon is selected from substituted and unsubstituted benzenes, preferably from alkylated benzenes, even more preferably from toluene and xylenes, and is most preferably toluene.

The electron donor can also be introduced in form of a precursor as described above, which is then transformed in situ to the electron donor by reaction with a corresponding Mg-alkoxide. The Mg-alkoxide is prepared as described above by reacting a magnesium compound with the corresponding alcohol (A) or alcohol (B).

Additional donors can be added, if so desired into the catalyst preparation in any of steps (a1) to (b1).Preferably additional donors, if used, are non-phthalic acid ester as well.

It is also possible to use mixtures of the above described donors.

The reaction medium corresponds to the organic liquid reaction medium (OM1) of step (a1).

The organic liquid reaction medium (OM2), where TiCl4 can be solved, can be the same as the organic liquid reaction medium (OM1) or can be different thereto, the latter being preferred.

Preferably the organic liquid reaction medium (OM2) is $C_5$ to $C_{10}$ hydrocarbon, more preferably of a $C_6$ to $C_{10}$ alkane, like heptane, octane or nonane, or any mixtures thereof.

It is in particular appreciated that the organic liquid reaction medium (OM1) is a $C_6$ to $C_{10}$ aromatic hydrocarbon, most preferably toluene, and the organic liquid reaction medium (OM2) is a $C_6$ to $C_{10}$ alkane, most preferably heptane.

Further it is appreciated that the organic liquid reaction media (OM1) and (OM2) are selected in a way which supports the immediate precipitation of the solid catalyst particle.

When adding the solution (S1) to the at least one transition metal compound (CT) mixing is appreciated. Suitable mixing techniques include the use of mechanical as well as the use of ultrasound for mixing, as known to the skilled person.

After precipitation the solid catalyst particle is washed in a known manner.

Accordingly it is preferred that solid catalyst particle is washed at least once up to 6 times, preferably at least twice, most preferably at least three times with a hydrocarbon, which preferably is selected from aromatic and aliphatic hydrocarbons, preferably with toluene, heptane or pentane, more preferably toluene, particularly with hot (e.g. 80 to 100°C) toluene, which might include a smaller or higher amount of $TiCl_4$ in it. The amount of $TiCl_4$ can vary from a few vol% to more than 50-vol%, such as from 5-vol% to 50-vol%, preferably from 5 to 15-vol%. It is also possible that at least one wash is done with 100-vol% $TiCl_4$.

One or several further washes after aromatic and/ or $TiCl_4$ washes can be run with aliphatic hydrocarbons of 4 to 8 carbon atoms. Preferable these latter washings are performed with heptane and/or pentane. Washings can be done with hot (e.g. 90°C) or cold (room temperature) hydrocarbons or combinations thereof. It is also possible that all washings will be done with the same solvent, e.g. toluene.

In addition, during the catalyst component preparation a reducing agent, which decreases the amount of titanium present in said solidified particles of the olefin polymerisation catalyst component being present in the oxidation state +4, can be added.

Suitable reducing agents are aluminium alkyl compounds, aluminium alkyl alkoxy compounds as well as magnesium compounds as defined in the present specification.

Suitable aluminium compounds have a general formula $AlR_{3-n}X_n$, wherein R stands for a straight chain or branched alkyl or alkoxy group having 1 to 20, preferably 1 to 10 and more preferably 1 to 6 carbon atoms, X independently represents a residue selected from the group of halogen, preferably chloride, and n stands for 0, 1 or 2. At least one of the R residues has to be an alkyl group.

The compound can be added as an optional compound to the catalyst component synthesis and can be added at any step (b1) to (c1), or during the washing step as described above, however, before step (d1).

Preferably the reducing compound is added during the washing step, more preferably during the first washing step with hot toluene.

Illustrative examples of aluminium alkyl and alkoxy compounds to be employed in accordance with the present invention are:

Tri-($C_1$-$C_6$)-alkyl aluminium compounds and chlorinated aluminium ($C_1$-$C_6$)-alkyl compounds, especially diethyl aluminium chloride;

diethyl aluminium ethoxide, ethyl aluminium diethoxide, diethyl aluminium methoxide, diethyl aluminium propoxide, diethyl aluminium butoxide, dimethyl aluminium ethoxide, of which in particular diethyl aluminium ethoxide is preferred.

Suitable magnesium compounds are magnesium compounds as defined herein in connection with the complex of a Group 2 metal. The respective disclosure is incorporated herein by reference with respect to the magnesium compound to be added in accordance with the process of the present invention. In particular, suitable magnesium compounds are dialkyl magnesium compounds or halogenated alkyl magnesium compounds of the general formula $MgR_{2-n}X_n$, where each n is 0 or 1, and each R are same or different alkyl groups with 1 to 8 carbon atoms and X is halogen, preferably Cl. One preferred magnesium compound is butyloctyl magnesium (commercially available under the trade name BOMAG), which is already preferably used in the preparation of the Mg complex.

The added amount of the optional Al compound depends on the desired degree of reduction of amount of titanium present in the solidified particles of the olefin polymerisation catalyst component being present in the oxidation state +4. The preferred amounts of Al in the catalyst component depend to some extent on the Al compound, e.g. if an Al alkoxy compound is used, the preferred final Al amounts seem to be lower than if e.g. Al alkyl chloride compounds are used.

The final catalyst component particles have an Al content of 0.0 to 0.8 wt%, preferably 0.0 to 0.5 wt% or 0.0 to 0.4 wt%.

The magnesium compound to be added in accordance with the present invention is added in corresponding amounts.

Preferably a chlorinated aluminium alkyl compounds, especially diethyl aluminium chloride; is added.

In the second embodiment the preparation of the catalyst component in form of solid particles comprises the steps of

(a2)

(a2-1) providing a solution (S1) of at least a first alkoxy compound (Ax) being the reaction product of a Group 2 metal compound and an alcohol mixture of a monohydric alcohol (A) of formula ROH, with R being $C_6$-$C_{10}$ alkyl and an alcohol (B) comprising in addition to the hydroxyl moiety at least one ether moiety, optionally in an organic liquid reaction medium; or

(a2-2) providing a solution (S1) of an alkoxy compound mixture of at least a first alkoxy compound (Ax) being the reaction product of a Group 2 metal compound and a monohydric alcohol (A) of formula ROH, with R being $C_6$-$C_{10}$ alkyl, optionally in an organic liquid reaction medium and at least a second alkoxy compound (Bx) being the reaction product of a Group 2 metal compound and an alcohol (B) comprising in addition to the hydroxyl moiety at least one ether moiety, optionally in an organic liquid reaction medium;

and an internal donor as described above, or a mixture therefrom, or a precursor thereof in an organic liquid reaction medium,

(b2) adding said solution (S1) to at least one compound of a transition metal to produce an emulsion, wherein the dispersed phase of which is in the form of droplets and contains more than 50 mol% of the Group 2 metal in the alkoxy compound,

(c2) agitating the emulsion in order to maintain the droplets of said dispersed phase within said predetermined average size range of 2 to 500$\mu$m,

(d2) solidifying said droplets of the dispersed phase,

(e2) recovering the solidified particles of the olefin polymerisation catalyst component.

In step (a2) it is possible to use an alkoxy compound (Ax) being a reaction product of at least one Group 2 metal compound and a mixture of alcohol (A) with alcohol (B) as defined above. (a2-1)

The second possibility (a2-2) is to use a mixture of an alkoxy compound (Ax) being a reaction product of at least one Group 2 metal compound and a monohydric alcohol (A) and an alkoxy compound (Bx) being a reaction product of at least one Group 2 metal compound and an alcohol (B), as defined above.

Possibility (a2-2) is preferred.

Suitable alkoxy compounds (Ax) and (Bx) and their preparation have been described above.

Suitable electron donors and their precursors as well as suitable transition metal compounds are also described above.

The internal donor or precursor thereof as defined above is added preferably in step (a2) to the alkoxy compound (Ax) of possibility (a2-1) or to the alkoxy compound (Ax) or (Bx) of possibility (a2-2. The solution (S1) of step (a2) is then typically added to the at least one compound of a transition metal, such as titanium tetrachloride. This addition preferably is carried out at a low temperature, such as from -10 to 40°C, preferably from -5 to 30°C, such as about 0°C to 25°C.

During any of these steps an organic reaction medium or solvent may be present, typically selected among aromatic and/or aliphatic hydrocarbons as described above.

Additional donors can be added, if so desired into the catalyst preparation in any of steps (a2) to (c2). Preferably

additional donors, if used, are non-phthalic acid ester as well.

It is also possible to use mixtures of the above described mixtures.

The process in accordance with the present invention yields as intermediate stage, as identified above an emulsion of a denser, transition metal compound/toluene-insoluble, oil dispersed phase typically having a transition metal metal/Group 2 mol ratio of 0.1 to 10 in an oil disperse phase having a transition metal/Group 2 mol ratio of 10 to 100. Transition metal compound is preferably Group 4 metal compound, and is most preferably $TiCl_4$. Group 2 metal is preferably Mg. This emulsion is then typically agitated, optionally in the presence of an emulsion stabilizer and/or a turbulence minimizing agent, in order to maintain the droplets of said dispersed phase, typically within an average size range of 5 to 500 $\mu$m. The catalyst particles are obtained after solidifying said particles of the dispersed phase e.g. by heating.

The said disperse and dispersed phases are thus distinguishable from one another by the fact that the denser oil, if contacted with a solution of Group 4 metal compound preferably TiCl4 in toluene, will not dissolve in it. A suitable solution for establishing this criterion would be one having a toluene mol ratio of 0.1 to 0.3. They are also distinguishable by the fact that the great preponderance of the Mg provided (as complex) for the reaction with the Group 4 metal compound is present in the dispersed phase, as revealed by comparison of the respective Group 4 metal/Mg mol ratios. In effect, therefore, virtually the entirety of the reaction product of the Mg complex with the Group 4 metal - which is the precursor of the ultimate catalyst component - becomes the dispersed phase, and proceeds through the further processing steps to the final particulate form. The disperse phase, still containing a useful quantity of Group 4 metal, can be reprocessed for recovery of that metal.

The production of a two-phase reaction product is encouraged by carrying out the Mg complex/Group 4 metal compound reaction at low temperature, specifically above -10°C but below 50°C, preferably between above -5°C and below 40°C. Since the two phases will naturally tend to separate into a lower, denser phase and supernatant lighter phase, it is necessary to maintain the reaction product as an emulsion by agitation, preferably in the presence of an emulsion stabilizer.

The emulsion, i.e. the two phase liquid-liquid system may be formed in all embodiments of the present invention by simple stirring and optionally adding (further) solvent(s) and additives, such as the turbulence minimizing agent (TMA) and/or the emulsifying agents described further below.

Emulsifying agents/emulsion stabilizers can be used additionally in a manner known in the art for facilitating the formation and/or stability of the emulsion. For the said purposes e.g. surfactants, e.g. a class based on acrylic or methacrylic polymers can be used. Preferably, said emulsion stabilizers are acrylic or methacrylic polymers, in particular those with medium sized ester side chains having more than 10, preferably more than 12 carbon atoms and preferably less than 30, and preferably 12 to 20 carbon atoms in the ester side chain. Particular preferred are unbranched $C_{12}$ to $C_{20}$ (meth)acrylates such as poly(hexadecyl)-methacrylate and poly(octadecyl)-methacrylate. Suitable examples of commercially available surfactants are e.g. those sold under the name of Viscoplex®, like Viscoplex®, 1-124 and 1-126, as indicated earlier in this application.

As mentioned above a turbulence minimizing agent (TMA) can be added to the reaction mixture in order to improve the emulsion formation and maintain the emulsion structure. Said TMA agent has to be inert and soluble in the reaction mixture under the reaction conditions, which means that polymers without polar groups are preferred, like polymers having linear or branched aliphatic carbon backbone chains.

Said TMA is in particular preferably selected from alpha-olefin polymers of alpha-olefin monomers with 6 to 20 carbon atoms, like polyoctene, polynonene, polydecene, polyundecene or polydodecene or mixtures thereof. Most preferable it is polydecene.

TMA can be added to the emulsion in an amount of e.g. 1 to 1.000 ppm, preferably 5 to 100 ppm and more preferable 5 to 50 ppm, based on the total weight of the reaction mixture.

It has been found that the best results are obtained when the Group 4 metal/Mg mol ratio of the denser oil is 1 to 5, preferably 2 to 4, and that of the disperse phase oil is 55 to 65. Generally the ratio of the mol ratio Group 4 metal/Mg in the disperse phase oil to that in the denser oil is at least 10.

Solidification of the dispersed phase droplets by heating is suitably carried out at a temperature of 70 to 150°C, usually at 80 to 110°C, preferably at 90 to 110°C.

For isolating the solidified particles the reaction mixture is allowed to settle and the solidified particles are recovered from this reaction mixture for example by syphoning or by an in-stream filtering unit.

The solidified particulate product may be washed at least once up to 6 times, preferably at least twice, most preferably at least three times with a hydrocarbon, which preferably is selected from aromatic and aliphatic hydrocarbons, preferably with toluene, heptane or pentane, more preferably toluene, particularly with hot (e.g. 80 to 100°C) toluene, which might include a smaller or higher amount of $TiCl_4$ in it. The amount of $TiCl_4$ can vary from a few vol% to more than 50-vol%, such as from 5-vol% to 50-vol%, preferably from 5 to 15-vol%. It is also possible that at least one wash is done with 100-vol% $TiCl_4$.

One or several further washes after aromatic and/ or $TiCl_4$ washes can be run with aliphatic hydrocarbons of 4 to 8

carbon atoms. Preferable these latter washings are performed with heptane and/or pentane. Washings can be done with hot (e.g. 90°C) or cold (room temperature) hydrocarbons or combinations thereof. It is also possible that all washings will be done with the same solvent, e.g. toluene.

The washing can be optimized to give a catalyst component with novel and desirable properties.

Finally, the washed catalyst component is recovered.

It can further be dried, as by evaporation or flushing with nitrogen or it can be slurred to an oily liquid without any drying step.

In addition, during the catalyst component preparation a reducing agent, which decreases the amount of titanium present in said solidified particles of the olefin polymerisation catalyst component being present in the oxidation state +4, can be added.

Suitable reducing agents are aluminium alkyl compounds, aluminium alkyl alkoxy compounds as well as magnesium compounds as defined in the present specification.

Suitable aluminium compounds have a general formula $AlR_{3-n}X_n$, wherein R stands for a straight chain or branched alkyl or alkoxy group having 1 to 20, preferably 1 to 10 and more preferably 1 to 6 carbon atoms, X independently represents a residue selected from the group of halogen, preferably chloride, and n stands for 0, 1 or 2. At least one of the R residues has to be an alkyl group.

The compound can be added as an optional compound to the catalyst component synthesis and brought into contact with the droplets of the dispersed phase of the agitated emulsion before recovering the solidified particles in step (e2). I.e. the Al compound can be added at any step (b2) to (d2), or during the washing step as described above, however, before step (e2). Reference is made to WO 2004/029112, EP-A-1 862 480 and to EP-A-1 862 481.

Illustrative examples of aluminium alkyl and alkoxy compounds to be employed in accordance with the present invention are:

Tri-($C_1$-$C_6$)-alkyl aluminium compounds and chlorinated aluminium ($C_1$-$C_6$)-alkyl compounds, especially diethyl aluminium chloride;

diethyl aluminium ethoxide, ethyl aluminium diethoxide, diethyl aluminium methoxide, diethyl aluminium propoxide, diethyl aluminium butoxide, dimethyl aluminium ethoxide, of which in particular diethyl aluminium ethoxide is preferred.

Suitable magnesium compounds are magnesium compounds as defined herein in connection with the complex of a Group 2 metal. The respective disclosure is incorporated herein by reference with respect to the magnesium compound to be added in accordance with the process of the present invention. In particular, suitable magnesium compounds are dialkyl magnesium compounds or halogenated alkyl magnesium compounds of the general formula $MgR_{2-n}X_n$, where each n is 0 or 1, and each R are same or different alkyl groups with 1 to 8 carbon atoms and X is halogen, preferably Cl. One preferred magnesium compound is butyloctyl magnesium (commercially available under the trade name BOMAG), which is already preferably used in the preparation of the Mg complex.

The added amount of the optional Al compound depends on the desired degree of reduction of amount of titanium present in the solidified particles of the olefin polymerisation catalyst component being present in the oxidation state +4. The preferred amounts of Al in the catalyst component depend to some extent on the Al compound, e.g. if an Al alkoxy compound is used, the preferred final Al amounts seem to be lower than if e.g. Al alkyl chloride compounds are used.

The final catalyst component particles have an Al content of 0.0 to 0.8 wt%, preferably 0.0 to 0.5 wt% or 0.0 to 0.4 wt%.

The magnesium compound to be added in accordance with the present invention is added in corresponding amounts.

Preferably an Al alkyl or Al alkyl alkoxy compound, as defined above, is added.

The aluminium alkyl or alkoxy compound and the magnesium compound can be used alone or in combination.

The optional Al or Mg or a mixture thereof is preferably added before step (e2), more preferably during the washing step, which comprises at least one, preferably two and more preferably three washing procedures with the same or preferably different hydrocarbons as washing medium.

The aluminium alkyl or alkoxy compound and/ or the magnesium compound to be used in the catalyst component preparation of the invention can be added to any of the washing mediums, which are, as described above, preferably toluene, heptane and/or pentane.

Though the procatalyst preparation according to the inventive method can be carried out batch-wise, it is also preferable and possible to prepare the catalyst component semi-continuously or continuously. In such semi-continuous or continuous process, the solution of the complex of the group 2 metal and said electron donor, which is prepared by reacting the compound of said metal with said electron donor in an organic liquid reaction medium, is mixed with at least one compound of a transition metal, which might be solved in the same or different organic liquid reaction medium. The

so obtained solution is then agitated, possibly in the presence of an emulsion stabilizer, and then the so-agitated emulsion is fed into a temperature gradient reactor, in which the emulsion is subjected a temperature gradient, thus leading to solidifying the droplets of a dispersed phase of the emulsion. The optional TMA is preferably contained in the solution of the complex or added to the solution before feeding the agitated solution to the temperature gradient reactor.

When feeding said agitated emulsion to the temperature gradient reactor, an inert solvent, in which the droplets are not soluble, can additionally be fed into that gradient reactor in order to improve the droplet formation and thus leading to a uniform grain size of the particles of the catalyst component, which are formed in the temperature gradient reactor when passing through said line. Such additional solvent might be the same as the organic liquid reaction medium, which is used for preparing the solution of the complex of the group 2 metal as explained above in more detail.

The solidified particles of the olefin polymerisation catalyst component can subsequently be recovered by an in-stream filtering unit and then, optionally after some additional washing and drying steps in order to remove unreacted starting components, can be stored for further use. In one embodiment the catalyst can be fed after washing steps into the olefin polymerisation reactor, so that a continuous preparation and feed to the reactor is guaranteed. It is also possible to mix the solidified and washed catalyst component with an oily fluidic liquid and store and use the catalyst component as catalyst component-oil slurry. In this way the drying steps can be avoided, which might be sometimes detrimental to the catalyst components morphology. This oil-slurry method is described in general in EP-A-1489110 of the applicant, incorporated herein by reference.

As it can be seen from the above description of the semi-continuous or continuous process, it is thus possible to use separated reaction vessels for the different process steps and to transfer the reaction products which are prepared in the respective reaction vessels and to feed them in-line into further reaction vessels for formation of the emulsion and, subsequently, of the solidified particles.

It is preferred to use a full-continuous process as the time saving in said process is remarkable. In such fully continuous process, the formation of the solidified particles could be carried out in the temperature gradient line in the kind of pipe reactor, which is sufficiently long and which is subjected said temperature gradient from the starting temperature in the lower range of 20 to 80°C up to a "solidifying" temperature of 70 to 150°C. The temperature gradient is preferably obtained by means of heating the pipe reactor from the outside by applying normal heaters, microwaves, etc.

As mentioned before, a filtering unit might preferably be used for filtering the solidified particles from the solvent stream. For said filtering unit, various drums and sieving systems can be used, depending on the specific particle sizes.

With both production ways, the finally obtained solid catalyst component is desirably in the form of particles having generally an average size range, determined by using a Coulter Counter LS200 at room temperature (20°C) with n-heptane as medium, of 2 to 500 μm, preferably 5 to 200 μm and more preferably 10 to 100, even an average size range of 20 to 60 μm is possible.

The particle size distribution, measured by Coulter method and defined as SPAN of the catalysts of the invention depends on the way of preparation. With the emulsion/solidification method the particle size distribution is usually lower than with the precipitation method. Nevertheless it is desired that the particle size distribution of the solid catalyst components prepared according to the precipitation method is as low as possible and even more preferred similar to that of solid catalyst components prepared according to the emulsion/solidification method.

Preferably the particle size distribution is in the range of 0.5 to at most 4.0, more preferable from 0.5 to at most 3.0 and even more preferably 0.5 to at most 2.0.

SPAN is defined as

$$\frac{\mathrm{d90}\ [\mu\mathrm{m}] - \mathrm{d10}\ [\mu\mathrm{m}]}{\mathrm{d50}\ [\mu\mathrm{m}]}$$

where d90 indicates the particle diameter at 90% cumulative size, d10 indicates the particle diameter at 10% cumulative size, and d50 indicates the particle diameter at 50% cumulative size.

Catalyst components prepared according to the method of the present invention have desired morphology and particle size as well as particle size distribution and yield catalysts with increased catalyst activity, which are suitable for producing polymers with the desired polymer properties.

It has been surprisingly found by the inventors of the present invention that catalyst component particles having desired morphology and particle size as well as particle size distribution can be obtained by a common mechanism either via the precipitation or via the emulsion/solidification way of preparing Ziegler-Natta (ZN) type catalysts, and are suitable for use in olefin polymerisation, like ethylene or propylene, in particular for propylene polymerisation, optionally with other co-monomers selected from $C_2$ - $C_{12}$ monomers, preferably $C_2$ - $C_6$ monomers.

The method of the present invention gives further possibilities to change the donor type and to adjust the donor concentrations, which allows preparation of catalysts and further polymers with desired properties.

Thus it is a further object of the present invention to provide catalyst components in form of solid particles by

a process as describe above and to the use thereof for the preparation of a catalyst system being suitable in olefin polymerisation processes

Polymerisation processes, where the catalyst components of the invention are useful comprise at least one polymerisation stage, where polymerisation is typically carried out in solution, slurry, bulk or gas phase. Typically the polymerisation process comprises additional polymerisation stages or reactors. In one particular embodiment the process contains at least one bulk reactor zone and at least one gas phase reactor zone, each zone comprising at least one reactor and all reactors being arranged in cascade. In one particularly preferred embodiment the polymerisation process for polymerising olefins, in particular propylene optionally with comonomers, like ethylene or other alpha-olefins, comprises at least one bulk reactor and at least one gas phase reactor arranged in that order. In some preferred processes the process comprises one bulk reactor and at least two, e.g. two or three gas phase reactors. The process may further comprise pre- and post reactors. Pre-reactors comprise typically prepolymerisation reactors. In these kinds of processes use of higher polymerisation temperature (70 °C or higher, preferably 80°C or higher, even 85 °C or higher) either in some or all reactors of the reactor cascade, is preferred in order to achieve some specific properties to the polymers.

For the production of the polypropylene homo- or copolymers according to the invention the catalyst system used comprises in addition to the catalyst components in form of solid particles as described above an organometallic cocatalyst.

Accordingly it is preferred to select the cocatalyst from the group consisting of trialkylaluminium, like triethylaluminium (TEA), triisobutylaluminium, tri-n-butylaluminium; dialkyl aluminium chloride, like dimethyl- or diethyl aluminium chloride; and alkyl aluminium sesquichloride. More preferably the cocatalyst is triethylaluminium or diethylaluminium chloride, most preferably triethylaluminium is used as cocatalyst.

Optionally one or more external donor are used, which may be typically selected e.g. from silanes or any other well known external donors in the field. External donors are known in the art and are used as stereoregulating agent in propylene polymerisation. The external donors are preferably selected from hydrocarbyloxy silane compounds, amino silane compounds and hydrocarbyloxy alkane compounds.

Typical hydrocarbyloxy silane compounds have the formula (II)

$$R^7_pSi(OR^8)_{4-p} \qquad (II)$$

wherein

$R^7$ is an alpha- or beta-branched $C_3$-$C_{12}$-hydrocarbyl,
$R^8$ a $C_1$-$C_{12}$-hydrocarbyl, and
p is an integer 1-3.

More specific examples of the hydrocarbyloxy silane compounds which are useful as external electron donors in the invention are diphenyldimethoxy silane, dicyclopentyldimethoxy silane, dicyclopentyldiethoxy silane, cyclopentylmethyldimethoxy silane, cyclopentylmethyldiethoxy silane, dicyclohexyldimethoxy silane, dicyclohexyldiethoxy silane, cyclohexylmethyldimethoxy silane, cyclohexylmethyldiethoxy silane, methylphenyldimethoxy silane, diphenyldiethoxy silane, cyclopentyltrimethoxy silane, phenyltrimethoxy silane, cyclopentyltriethoxy silane, phenyltriethoxy silane.

Most preferably, the alkoxy silane compound having the formula (II) is dicyclopentyl dimethoxy silane or cyclohexylmethyl dimethoxy silane.

Typical amino silane compounds have the formula (III)

$$Si(OR^9)_3(NR^{10} R^{11})$$

wherein
$R^9$ is a hydrocarbon group having 1 to 6 carbon atoms, $R^{10}$ is a hydrocarbon group having 1 to 12 carbon atoms or hydrogen atom, and $R^{11}$ is a hydrocarbon group having 1 to 12 carbon atoms.

Preferably these compounds have the formula (IV)

$$Si(OCH_2CH_3)_3(NR^{10}R^{11})$$

Wherein
$R^{10}$ and $R^{11}$ are independently selected from the group consisting of linear aliphatic hydrocarbon group having 1 to 12 carbon atoms, branched aliphatic hydrocarbon group having 1 to 12 carbon atoms and cyclic aliphatic hydrocarbon group having 1 to 12 carbon atoms.

It is in particular preferred that $R^{10}$ and $R^{11}$ are independently selected from the group consisting of methyl, ethyl, n-propyl, n-butyl, octyl, decanyl, iso-propyl, iso-butyl, iso-pentyl, tert.-butyl, tert.-amyl, neopentyl, cyclopentyl, cyclohexyl,

methylcyclopentyl and cycloheptyl. More preferably both $R^{10}$ and $R^{11}$ are the same and have 1 to 6 carbon atoms, yet more preferably both $R^{10}$ and $R^{11}$ are a $C_1$-$C_4$-alkyl group.

Most preferably the external donor represented by the formula (III) or (IV) is
Diethyl aminotriethoxy silane.

The external donor used for the catalyst system is therefore preferably diethyl aminotriethoxy silane, dicyclopentyl dimethoxy silane or cyclohexyl methyldimethoxy silane.

## EXPERIMENTAL PART

### 1. METHODS

**Melt Flow Rate** MFR: ISO 1133; 230 C, 2.16 kg load

**Particle Size Distribution** PSD:

Coulter Counter LS 200 at room temperature with heptane as medium

**Mean particle size** is given in $\mu$m and measured with Coulter Counter LS200 at room temperature with n-heptane as medium; particle sizes below 100 $\mu$m by transmission electron microscopy.

**Median particle size (d50)** is given in $\mu$m and measured with Coulter Counter LS200 at room temperature with n-heptane as medium.

**Particle size (d10)** is given in $\mu$m and measured with Coulter Counter LS200 at room temperature with n-heptane as medium.

**Particle size (d90)** is given in $\mu$m and measured with Coulter Counter LS200 at room temperature with n-heptane as medium.

**SPAN** is defined as follows:

$$\frac{\mathrm{d90}\ [\mu\mathrm{m}] - \mathrm{d10}\ [\mu\mathrm{m}]}{\mathrm{d50}\ [\mu\mathrm{m}]}$$

**ICP Analysis (Al, Mg, Ti)**

The elemental analysis of a catalyst was performed by taking a solid sample of mass, M, cooling over dry ice. Samples were diluted up to a known volume, V, by dissolving in nitric acid ($HNO_3$, 65 %, 5 % of V) and freshly deionised (DI) water (5 % of V). The solution was further diluted with DI water up to the final volume, V, and left to stabilize for two hours.

The analysis was run at room temperature using a Thermo Elemental iCAP 6300 Inductively Coupled Plasma - Optical Emmision Spectrometer (ICP-OES) which was calibrated using a blank (a solution of 5 % $HNO_3$), and standards of 0.5 ppm, 1 ppm, 10 ppm, 50 ppm, 100 ppm and 300 ppm of Al, Mg and Ti in solutions of 5 % $HNO_3$.

Immediately before analysis the calibration is 'resloped' using the blank and 100 ppm standard, a quality control sample (20 ppm Al, Mg and Ti in a solution of 5 % $HNO_3$, 3 % HF in DI water) is run to confirm the reslope. The QC sample is also run after every $5^{th}$ sample and at the end of a scheduled analysis set.

The content of Mg was monitored using the 285.213 nm line and the content for Ti using 336.121 nm line. The content of aluminium was monitored via the 167.079 nm line, when Al concentration in ICP sample was between 0-10 ppm (calibrated only to 100 ppm) and via the 396.152 nm line for Al concentrations above 10 ppm.

The reported values are an average of three successive aliquots taken from the same sample and are related back to the original catalyst by inputting the original mass of sample and the dilution volume into the software.

**Determination of donor amounts in the catalyst components**

The determination of donor amounts in the catalyst components is performed using HPLC (UV-detector, RP-8 column, 250 mm $\times$ 4 mm). Pure donor compounds are used to prepare standard solutions.

50-100 mg of the catalyst component is weighed in a 20 ml vial (accuracy of weighing 0.1 mg). 10 ml acetonitrile is added and the sample suspension is sonicated for 5-10 min in an ultrasound bath. The acetonitrile suspension is diluted appropriately and a liquid sample is filtered using 0.45 $\mu$m filter to the sample vial of HPLC instrument. Peak heights are obtained from HPLC.

The percentage of donor in the catalyst component is calculated using the following equation:

$$\text{Percentage (\%)} = A_1 \cdot c \cdot V \cdot A_2^{-1} \cdot m^{-1} \cdot 0.1\%$$

where

| | |
|---|---|
| $A_1$ | = height of the sample peak |
| c | = concentration of the standard solution (mg/l) |
| V | = volume of the sample solution (ml) |
| $A_2$ | = height of the standard peak |
| m | = weight of the sample (mg) |

**Donor analysis via GC**

The donor analysis of a catalyst was performed by taking a solid sample of mass, M, approximately 2 ml of solvent, dichloromethane, was added. Following this approximately 1 ml of deionised water was added to the vial. Finally, a known mass, N, of an internal standard, nonane, was added. The mixture was then sonicated for 15 min, to ensure full dissolution.
After sonication the sample is left to settle into two phases and an aliquot of the organic phase is removed, this is then filtered through a 0.45 μm nylon filter into a vial suitable for the gas chromatography instrument.
The analysis is performed on a Perkin Elmer Auto System XL Gas Chromatograph containing a split loop injector and flame ionization detector. The column is a DB-1, 30 m long with an inner diameter of 0.32 mm and a phase thickness of 0.25 μm. The system stays at 40 °C for 5 minutes before ramping at 10 °C/min up to 250 °C; the system is kept at temperature for a further 4 minutes. If required the peak temperature could be raised to 300 °C. The results are calculated in the following manner.

$$\text{Component (wt\%)} = \frac{Ax * F * N}{Ay * Fistd * M} * 100$$

where:

| | |
|---|---|
| Ax | = component area |
| F | = component factor |
| N | = mass of internal standard (nonane), mg |
| Ay | = area of internal standard (nonane) |
| Fistd | = factor of internal standard (nonane) |
| M | = mass of the sample, mg |

**RANDOMNESS**

Infrared (IR) spectroscopy was undertaken on Nicolet Magna IR Spectrometer 550. A 220-250 μm film was prepared from the polymer powder at 230°C followed by rapid cooling to room temperature. All IR analysis was done within two hours of film preparation. Quantitative comonomer contents were obtained using peak areas normalised to the peak height of an internal reference band calibrated to previous $^{13}C$ NMR results. Ethylene was quantified using the band at 733 $cm^{-1}$ (baseline 690-780 $cm^{-1}$) the reference band at 809 $cm^{-1}$ (baseline 750-890 $cm^{-1}$). The amount of isolated ethylene units (randomness) was estimated using the peak height of the band at 733 $cm^{-1}$ (baseline 690-780 $cm^{-1}$) and the same reference band described above. Calibration was made to previously obtained $^{13}C$ NMR results.

$$\text{Randomness} = \text{random ethylene (-P-E-P-) content / the total ethylene content} \times 100\%.$$

**Xylene solubles** XS: Xylene soluble fraction of product at 25°C.
2.0 g of polymer are dissolved in 250 ml p-xylene at 135 °C under agitation. After 30±2 minutes the solution is allowed to cool for 15 minutes at ambient temperature and then allowed to settle for 30 minutes at 25±0.5 °C. The solution is filtered with filter paper into two 100 ml flasks.
The solution from the first 100 ml vessel is evaporated in nitrogen flow and the residue is dried under vacuum at 90 °C

until constant weight is reached.

$$XS\% = (100 \times m1 \times v0) / (m0 \times v1)$$

m0 = initial polymer amount (g)
m1 = weight of residue (g)
v0 = initial volume (ml)
v1 = volume of analyzed sample (ml)

All reactions in the examples as described are carried out under inert conditions.

## EXAMPLES

### Example 1:

*Preparation of Mg-alkoxide*

43.9 ml of 2-ethylhexanol were added to a 300 ml glass reactor. 123.9 ml of a 20 % solution in toluene of BOMAG (butyl octyl magnesium) provided by Crompton GmbH were slowly added to the well stirred 2-ethyl hexanol. During the addition the temperature was kept below 40 °C. Then the temperature of the reaction mixture was raised to 60 °C and mixing was continued at this temperature for 60 minutes. Finally the Mg-alkoxide was transferred to septa bottles after cooling to room temperature.

### Example 2:

*In-situ preparation of donor*

5.05 ml (5.25 g) of 1,2-propylene glycol were added to a 300 ml glass reactor at room temperature. 61.9 ml of a 20 % solution in toluene of BOMAG provided by Crompton GmbH were slowly added to the well stirred propylene glycol. During the addition the temperature was kept below 40 °C. Then the temperature of the reaction mixture was raised to 60 °C and mixing was continued at this temperature for 60 minutes. After cooling of the reaction mixture to room temperature 17.80 g benzoylchloride were added. The temperature of the reaction mixture was raised to 60 °C and mixing at this temperature was continued for one further hour. Finally the thus obtained donor suspension was transferred to septa bottles after cooling to room temperature.

### Example 3:

*Preparation of Mg-complex*

9.60 ml (8.45 g) of the Mg-alkoxide prepared according to Example 1 were placed in a septa bottle ($N_2$ atmosphere, equipped with a magnetic stir bar). 6.40 ml (5.63 g) of the donor suspension prepared according to Example 2 were added at room temperature and the reaction mixture was mixed for 1 hour at room temperature.

### Example 4: (Comparative Example CE1)

*Preparation of catalyst component*

6.5 ml titanium tetrachloride were placed in a 300 ml reactor equipped with a mechanical stirrer at 25°C. Mixing speed was adjusted to 400 rpm. 4.2 ml of a mixture consisting of 0.30 ml of a solution in toluene of 0.60 mg Necadd 447, 0.6 ml of a 50 wt% solution in toluene of Viscoplex 1-254 and 3.30 ml heptane was added at once. Then the reactor temperature was raised to 90°C within 5 minutes. When the temperature is reached 11.0 ml of the Mg-complex prepared according to Example 3 were added within 15 minutes with constant feed rate, whereby the temperature was kept at 90°C during the addition. The reaction mixture was stirred for further 30 minutes at 90°C. Afterwards stirring was stopped and the reaction mixture was allowed to settle for 15 minutes at 90°C.
After settling and siphoning the solids underwent 3 washing steps:

*Wash 1: toluene/DEAC wash*

Washing with a mixture of 0.03 ml diethyl aluminum chloride and 33 ml of toluene at 90 °C for 30 minutes under stirring with 300 rpm. Afterwards stirring was stopped and the reaction mixture was allowed to settle for 15 minutes at 90°C with subsequent siphoning.

*Wash 2: 1st heptane wash*

Washing with 20 ml of heptane at 90 °C for 7 minutes under stirring with 300 rpm. Afterwards the reaction temperature is decreased to 25°C during 13 minutes. Then stirring was stopped and the reaction mixture was allowed to settle for 15 minutes at 25°C with subsequent siphoning.

*Wash 3: 2nd heptane wash*

Washing with 20 ml of heptane at 25 °C for 20 minutes under stirring with 300 rpm. Afterwards stirring was stopped and the reaction mixture was allowed to settle for 10 minutes at 25°C with subsequent siphoning.

Finally, the temperature was increased to 70 °C during 7 minutes followed by $N_2$ sparging for 20 minutes, to yield an air sensitive powder.

**Example 5:**

*Preparation of Mg-alkoxide*

41.4 ml of propylene glycol butyl ether were added to a 300 ml glass reactor. 123.9 ml of a 20 % solution in toluene of BOMAG provided by Crompton GmbH were slowly added to the well stirred propylene glycol butyl ether. During the addition the temperature was kept below 40 °C. Then the temperature of the reaction mixture was raised to 60 °C and mixing was continued at this temperature for 60 minutes. Finally the Mg-alkoxide was transferred to septa bottles after cooling to room temperature.

**Example 6:**

*Preparation of Mg-complex*

6.27 ml (5.52 g) of the Mg-alkoxide prepared according to Example 1 were placed in a septa bottle ($N_2$ atmosphere, equipped with a magnetic stir bar). 4.18 ml (3.68 g) of the donor suspension prepared according to Example 2 were added at room temperature. Then 5.17 ml (4.60 g) of the Mg-alkoxide prepared according to Example 5 were added at room temperature and the reaction mixture was mixed for 1 hour at room temperature.

**Example 7:**

*Preparation of catalyst component*

6.5 ml titanium tetrachloride were placed in a 50 ml glass reactor equipped with a mechanical stirrer at 25°C. Mixing speed was adjusted to 400 rpm. 4.2 ml of a mixture consisting of 0.30 ml of a solution in toluene of 0.60 mg Necadd 447, 0.6 ml of a 50 wt% solution in toluene of Viscoplex 1-254 and 3.30 ml heptane was added at once. Then the reactor temperature was raised to 90°C within 5 minutes. When the temperature is reached 11.0 ml of the Mg-complex prepared according to Example 6 were added within 15 minutes with constant feed rate, whereby the temperature was kept at 90°C during the addition. The reaction mixture was stirred for further 30 minutes at 90°C. Afterwards stirring was stopped and the reaction mixture was allowed to settle for 15 minutes at 90°C.

After settling and siphoning the solids underwent 3 washing steps:

*Wash 1: toluene/DEAC wash*

Washing with a mixture of 0.03 ml diethyl aluminum chloride and 33 ml of toluene at 90 °C for 30 minutes under stirring with 300 rpm. Afterwards stirring was stopped and the reaction mixture was allowed to settle for 15 minutes at 90°C with subsequent siphoning.

*Wash 2: 1st heptane wash*

Washing with 20 ml of heptane at 90 °C for 7 minutes under stirring with 300 rpm. Afterwards the reaction temperature is decreased to 25°C during 13 minutes. Then stirring was stopped and the reaction mixture was allowed to settle for 15 minutes at 25°C with subsequent siphoning.

*Wash 3: 2nd heptane wash*

Washing with 20 ml of heptane at 25 °C for 20 minutes under stirring with 300 rpm. Afterwards stirring was stopped and the reaction mixture was allowed to settle for 10 minutes at 25°C with subsequent siphoning

Finally, the temperature was increased to 70 °C during 7 minutes followed by $N_2$ sparging for 20 minutes, to yield an air-sensitive powder.

**Example 8:**

*In-situ preparation of donor*

5.0 ml (5.25 g) of 1,3-propylene glycol were added to a 300 ml glass reactor at room temperature. 61.9 ml of a 20 % solution in toluene of BOMAG (Mg(Bu)1,5(Oct)0,5) provided by Crompton GmbH were slowly added to the well stirred propylene glycol. During the addition the temperature was kept below 40 °C. Then the temperature of the reaction mixture was raised to 60 °C and mixing was continued at this temperature for 60 minutes. After cooling of the reaction mixture to room temperature 17.80 g benzoylchloride were added. The temperature of the reaction mixture was raised to 60 °C and mixing at this temperature was continued for one further hour. Finally the thus obtained donor suspension was transferred to septa bottles after cooling to room temperature.

**Example 9**

*Preparation of Mg-complex*

9.60 ml (8.45 g) of the Mg-alkoxide prepared according to Example 1 were placed in a septa bottle ($N_2$ atmosphere, equipped with a magnetic stir bar). 6.40 ml (5.63 g) of the donor suspension prepared according to Example 8 were added at room temperature and the reaction mixture was mixed for 1 hour at room temperature.

**Example 10: (Comparative Example CE2)**

*Preparation of catalyst component*

The catalyst component was prepared as described in Example 7, except that the Mg-complex prepared according to Example 9 was used.

**Example 11:**

*Preparation of Mg-complex*

6.27 ml (5.52 g) of the Mg-alkoxide prepared according to Example 1 were placed in a septa bottle ($N_2$ atmosphere, equipped with a magnetic stir bar). 4.18 ml (3.68 g) of the donor suspension prepared according to Example 8 were added at room temperature. Then 5.17 ml (4.60 g) of the Mg-alkoxide prepared according to Example 5 were added at room temperature and the reaction mixture was mixed for 1 hour at room temperature.

**Example 12:**

*Preparation of catalyst component*

The catalyst component was prepared as described in Example 7, except that the Mg-complex prepared according to Example 11 was used.

**Example 13:**

*Preparation of Mg-complex*

30.0 ml (26.4 g) of the Mg-alkoxide prepared according to Example 1 were placed in a septa bottle ($N_2$ atmosphere, equipped with a magnetic stir bar). 2.24 g of diethyl-2-cyclopentyl maleate were added slowly at room temperature and the reaction mixture was mixed for 10 minutes at room temperature.

**Example 14: (Comparative Example CE3)**

*Preparation of catalyst component*

The catalyst component was prepared as described in Example 7, except that the Mg-complex prepared according to Example 13 was used.

**Example 15:**

*Preparation of Mg-complex*

10.04 ml (8.87 g) of the Mg-alkoxide prepared according to Example 1 were placed in a septa bottle ($N_2$ atmosphere, equipped with a magnetic stir bar). 4.96 ml (4.33 g) of the Mg-alkoxide prepared according to Example 5 were added at room temperature. Then 1.13 g of diethyl-2-cyclopentyl maleate were added at room temperature and the reaction mixture was mixed for 1 hour at room temperature.

**Example 16:**

*Preparation of catalyst component*

The catalyst component was prepared as described in Example 7, except that the Mg-complex prepared according to Example 15 was used.

**Example 17:**

*Preparation of Mg-complex*

15.0 ml (13.20 g) of the Mg-alkoxide prepared according to Example 1 were placed in a septa bottle ($N_2$ atmosphere, equipped with a magnetic stir bar). Then 1.19 g of diethyl-2-cyclohexyl maleate were added at room temperature and the reaction mixture was mixed for 10 minutes at room temperature.

**Example 18: (Comparative Example CE4)**

*Preparation of catalyst component*

The catalyst component was prepared as described in Example 7, except that the Mg-complex prepared according to Example 17 was used.

**Example 19:**

*Preparation of Mg-complex*

10.04 ml (8.87 g) of the Mg-alkoxide prepared according to Example 1 were placed in a septa bottle ($N_2$ atmosphere, equipped with a magnetic stir bar). 4.96 ml (4.33 g) of the Mg-alkoxide prepared according to Example 5 were added at room temperature. Then 1.19 g of diethyl-2-cyclohexyl maleate were added at room temperature and the reaction mixture was mixed for 10 minutes at room temperature.

**Example 20:**

*Preparation of catalyst component*

The catalyst component was prepared as described in Example 7, except that the Mg-complex prepared according to Example 19 was used.

**Example 21:**

*Preparation of Mg-complex*

15.0 ml (13.20 g) of the Mg-alkoxide prepared according to Example 1 were placed in a septa bottle ($N_2$ atmosphere, equipped with a magnetic stir bar). Then 1.07 g of diethyl-2-isobutyl maleate were slowly added at room temperature and the reaction mixture was mixed for 10 minutes at room temperature.

**Example 22: (Comparative Example CE5)**

*Preparation of catalyst component*

The catalyst component was prepared as described in Example 7, except that the Mg-complex prepared according to Example 21 was used.

**Example 23:**

*Preparation of Mg-complex*

10.04 ml (8.87 g) of the Mg-alkoxide prepared according to Example 1 were placed in a septa bottle ($N_2$ atmosphere, equipped with a magnetic stir bar). 4.96 ml (4.33 g) of the Mg-alkoxide prepared according to Example 5 were added at room temperature. Then 1.07 g of diethyl-2-isobutyl maleate were added slowly at room temperature and the reaction mixture was mixed for 10 minutes at room temperature.

**Example 24:**

*Preparation of catalyst component*

The catalyst component was prepared as described in Example 7, except that the Mg-complex prepared according to Example 23 was used.

**Example 25:**

*Preparation of Mg-complex*

11.2 ml (9.84 g) of the Mg-alkoxide prepared according to Example 1 were placed in a septa bottle ($N_2$ atmosphere, equipped with a magnetic stir bar). 2.80 ml (2.46 g) of the Mg-alkoxide prepared according to Example 5 were added at room temperature. Then 1.00 g of diethyl-2-isobutyl maleate were added slowly at room temperature and the reaction mixture was mixed for 5 minutes at room temperature.

**Example 26:**

*Preparation of catalyst component*

The catalyst component was prepared as described in Example 7, except that the Mg-complex prepared according to Example 25 was used.

**Example 27:**

*Preparation of Mg-alkoxide*

16.0 ml of propylene glycol ethyl ether were added to a 300 ml glass reactor. 63.0 ml of a 20 % solution in toluene of BOMAG provided by Crompton GmbH were slowly added to the well stirred propylene glycol ethyl ether. During the addition the temperature was kept below 40 °C. Then the temperature of the reaction mixture was raised to 60 °C and mixing was continued at this temperature for 60 minutes. Finally the Mg-alkoxide was transferred to septa bottles after cooling to room temperature.

**Example 28:**

*Preparation of Mg-complex*

8.30 ml (7.30 g) of the Mg-alkoxide prepared according to Example 1 were placed in a septa bottle ($N_2$ atmosphere, equipped with a magnetic stir bar). 4.17 ml (3.66 g) of the Mg-alkoxide prepared according to Example 27 were added at room temperature. Then 0.89 g of diethyl-2-isobutyl maleate were added slowly at room temperature and the reaction mixture was mixed for 5 minutes at room temperature.

**Example 29:**

*Preparation of catalyst component*

The catalyst component was prepared as described in Example 7, except that the Mg-complex prepared according to Example 28 was used.

**Example 30:**

*Preparation of Mg-complex*

11.2 ml (9.84 g) of the Mg-alkoxide prepared according to Example 1 were placed in a septa bottle ($N_2$ atmosphere, equipped with a magnetic stir bar). 2.80 ml (2.46 g) of the Mg-alkoxide prepared according to Example 27 were added at room temperature. Then 1.00 g of diethyl-2-isobutyl maleate were added slowly at room temperature and the reaction mixture was mixed for 5 minutes at room temperature.

**Example 31:**

*Preparation of catalyst component*

The catalyst component was prepared as described in Example 7, except that the Mg-complex prepared according to Example 30 was used.

**Table 1: Composition of the catalyst components**

| Catalyst component | Mg (wt%) | Al (wt%) | Ti (wt%) | Max Donor[1] (wt%) |
|---|---|---|---|---|
| CE1 | 13.7 | 0.10 | 2.35 | 38.1 |
| Example 7 | 13.5 | 0.05 | 2.98 | 36.5 |
| CE2 | 9.3 | 0.06 | 4.90 | 35.1 |
| Example 12 | 13.3 | 0.06 | 4.27 | 31.1 |
| CE3 | 14.9 | 0.41 | 2.15 | 32.0 |
| Example 16 | 13.5 | 0.07 | 3.72 | 29.5 |
| CE4 | 13.9 | 0.31 | 3.66 | 30.0 |
| Example 20 | 13.8 | 0.14 | 3.85 | 49.4 |
| CE5 | 10.5 | 0.10 | 2.38 | 23.5 |

(continued)

| Catalyst component | Mg (wt%) | Al (wt%) | Ti (wt%) | Max Donor[1] (wt%) |
|---|---|---|---|---|
| Example 24 | 15.1 | 0.12 | 4.24 | 38.1 |
| Example 26 | 14,3 | 0.23 | 4.35 | 25.6 |
| Example 29 | 12.7 | 0.21 | 5.44 | 27.7 |
| Example 31 | 12.3 | 0.25 | 4.90 | 31.2 |
| [1]) calculated maximum amount of donor according to the formula: | | | | |

$$100 - (3.917*Mg\% + 4.941*Al\% + 3.962*Ti\%) = \text{max amount of donor } (\%)$$

which is based on the assumption that all Mg is in the form of $MgCl_2$, all Al is in the form of $AlCl_3$ and all Ti is in the form of $TiCl_4$ and no hydrocarbons are present

**Example 32: Bench scale PP-polymerisation procedure**

A 5 litre stainless steel reactor was used for propylene polymerisations.
About 0.9 ml triethyl aluminium (TEA) (from Witco, used as received) as a co-catalyst, ca 0.13 ml dicyclopentyl dimethoxy silane (DCDS) (from Wacker, dried with molecular sieves) as an external donor and 30 ml n-pentane were mixed and allowed to react for 5 minutes. Half of the mixture was then added to the polymerisation reactor and the other half was mixed with about 20 mg of a catalyst. After additional 5 minutes the catalyst/TEA/donor/n-pentane mixture was added to the reactor. The Al/Ti ratio was 250 mol/mol and the Al/DCDS ratio was 10 mol/mol. 200 mmol hydrogen and 1400 g propylene were introduced into the reactor and the temperature was raised within ca 15 minutes to the polymerisation temperature (80 °C). The polymerisation time after reaching polymerisation temperature was 60 minutes, after which the polymer formed was taken out from the reactor.

**Table 2: Polymerisation results**

| Catalyst | Activity (kg PP/g cat) | XS (wt%) | MFR (g/10 min) |
|---|---|---|---|
| CE1 | 4.8 | 2.4 | 18.0 |
| Example 7 | 12.6 | 3.1 | 27.0 |
| CE2 | 5.0 | 2.5 | 16.0 |
| Example 12 | 8.1 | 3.1 | 20.0 |
| CE3 | 8.6 | 2.5 | 14.0 |
| Example 16 | 14.7 | 2.5 | 14.0 |
| CE4 | 18.7 | 1.9 | 8.6 |
| Example 20 | 32.6 | 1.8 | 6.8 |
| CE5 | 5.9 | 2.5 | 13.0 |
| Example 24 | 21.1 | 1.9 | 6.8 |
| Example 26 | 11.0 | 1.2 | 6.7 |
| Example 29 | 9.2 | 3.1 | 8.4 |
| Example 31 | 13.1 | 2.1 | 7.1 |

As can be seen from table 2 the catalyst components produced with the special alcohol mixture show significantly higher activities than those prepared according to the state of the art using only monohydric alcohols.

**Claims**

1. Process for the preparation of an olefin polymerisation catalyst component in the form of solid particles comprising the steps of

(a1)

(a1-1) providing a solution (S1) of at least a first alkoxy compound (Ax) being the reaction product of a Group 2 metal compound and an alcohol mixture of a monohydric alcohol (A) of formula ROH, with R being $C_6$-$C_{10}$ alkyl and an alcohol (B) selected from ethylene glycol butyl ether, ethylene glycol hexyl ether, ethylene glycol 2-ethylhexyl ether, propylene glycol n-butyl ether, propylene glycol methyl ether, propylene glycol ethyl ether, propylene glycol n-hexyl ether, and propylene glycol 2-ethylhexyl ether, optionally in an organic liquid reaction medium; or
(a1-2) providing a solution (S1) of an alkoxy compound mixture of at least a first alkoxy compound (Ax) being the reaction product of a Group 2 metal compound and a monohydric alcohol (A) of formula ROH, with R being $C_6$-$C_{10}$ alkyl, optionally in an organic liquid reaction medium and at least a second alkoxy compound (Bx) being the reaction product of a Group 2 metal compound and an alcohol (B) selected from ethylene glycol butyl ether, ethylene glycol hexyl ether, ethylene glycol 2-ethylhexyl ether, propylene glycol n-butyl ether, propylene glycol methyl ether, propylene glycol ethyl ether, propylene glycol n-hexyl ether, and propylene glycol 2-ethylhexyl ether, optionally in an organic liquid reaction medium;

and an internal electron donor or a mixture therefrom or a corresponding precursor thereof in an organic liquid reaction medium (OM1),
(b1) combining said solution (S1) with at least one transition metal compound (CT), and
(c1) precipitating said catalyst component in the form of a solid particle, and
(d1) recovering the solidified particles of the olefin polymerisation catalyst component

wherein the internal donors are selected from

i) benzoates of the formula (I)

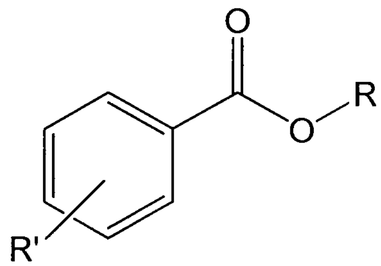

(I)

with R being a linear or branched $C_1$-$C_{12}$-alkyl group, preferably a linear or branched $C_2$-$C_{10}$-alkyl group, more preferably a linear or branched $C_4$-$C_9$-atkyl group and most preferably a branched $C_6$-$C_8$-alkyl group and
R' being H or a linear or branched $C_1$-$C_{12}$-alkyl group, preferably a linear or branched $C_2$-$C_{10}$-alkyl group more preferably a linear or branched $C_4$-$C_8$-alkyl group, whereby the alkyl group can contain one or more heteroatoms selected from O, N or S, preferably O or N, more preferably O, in the alkyl chain, or can be substituted by one or more substituents selected from =O, halogen, like chlorine, fluorine or bromine, or optionally substituted $C_6$-$C_{14}$-aryl,

ii) alkylene glycol dibenzoates selected from the group consisting of ethylene glycol dibenzoate, 1,2-propylene glycol dibenzoate and 1,3-propylene glycol dibenzoate,
iii) maleates of formula (III)

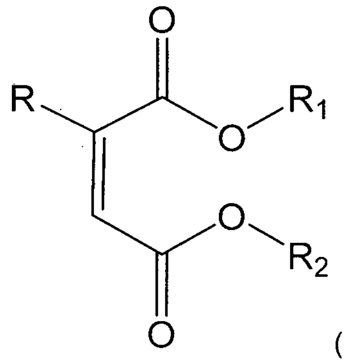

(III)

with $R_1$ and $R_2$ being the same or different and being a linear or branched $C_1$-$C_8$-alkyl group, more preferably a linear or branched $C_1$-$C_4$-alkyl group and most preferably ethyl, whereby $R_1$ and $R_2$ are preferably the same and
with R being H or a linear, branched or cyclic $C_3$ to $C_{12}$-alkyl, preferably a branched or cyclic $C_3$ to $C_3$-alkyl,

iv) 1,3-diethers of formula (V) or (VI)

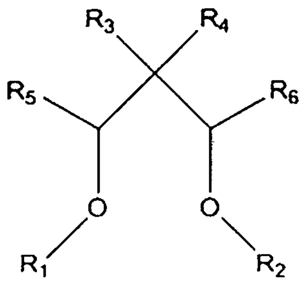 (V) or 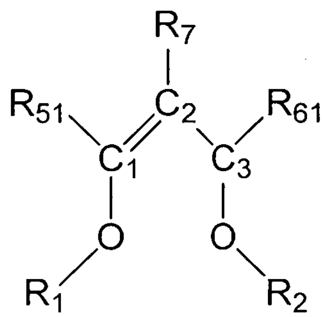 (VI)

wherein in formula (V) and (VI)
$R_1$ and $R_2$ are the same or different and can be a linear or branched $C_1$-$C_{12}$-alkyl, or $R_1$ with $R_5$ and/or $R_2$ with $R_6$ can form a ring with 4 to 6 C-atoms,
$R_3$ and $R_4$ of formula (V) are the same or different and can be H or a linear or branched $C_1$-$C_{12}$-alkyl or $R_3$ and $R_4$ can form together a ring with 5 to 10 C-atoms, which can be part of an aliphatic or aromatic polycyclic ring system with 9 to 20 C atoms,
$R_5$ and $R_6$ in formula (V) are the same or different and can be H or a linear or branched $C_1$-$C_{12}$-alkyl or can form together an aliphatic ring with 5 to 8 C-atoms,

and $R_{51}$, $R_{61}$ and $R_7$ in formula (VI) are the same or different and can be H or a linear or branched $C_1$-$C_{12}$-alkyl or two or three of $R_{51}$, $R_{61}$ and $R_7$ can form together with $C_1$ to $C_3$ an aromatic ring or ring system with 6 to 14 C-atoms, preferably 10 to 14 C-atoms.

**2.** Process according to claim 1, wherein the addition of solution (S1) to the at least one transition metal compound (CT) in step (b1) is done at a temperature range of 50 to 110 °C, at which temperature the at least one transition metal compound (CT) is in a liquid form, resulting in the precipitation of said solid catalyst components whereby a surfactant can be added in step (a1) or step (b1).

**3.** Process according to claim 1, wherein the solution (S1) is mixed with at least one transition metal compound (CT) in liquid form at a temperature of about -20°C to about 30°C and precipitating the solid catalyst components by subsequently slowly raising the temperature to a temperature range of 50 to 110 °C, whereby the rate of temperature increase is in the range from 0.1 °C to 30°C per minute, preferably 0.5 to 10°C per minute and whereby a surfactant is added to the solution (S1) before step (b1).

**4.** Process for the preparation of an olefin polymerisation catalyst component in the form of solid particles comprising the steps of

(a2)

(a2-1) providing a solution (S1) of at least a first alkoxy compound (Ax) being the reaction product of a Group 2 metal compound and an alcohol mixture of a monohydric alcohol (A) of formula ROH, with R being $C_6$-$C_{10}$ alkyl and an alcohol (B) selected from ethylene glycol butyl ether, ethylene glycol hexyl ether, ethylene glycol 2-ethylhexyl ether, propylene glycol n-butyl ether, propylene glycol methyl ether, propylene glycol ethyl ether, propylene glycol n-hexyl ether, and propylene glycol 2-ethylhexyl ether, optionally in an organic liquid reaction medium; or
(a2-2) providing a solution (S1) of an alkoxy compound mixture of at least a first alkoxy compound (Ax) being the reaction product of a Group 2 metal compound and a monohydric alcohol (A) of formula ROH, with R being $C_6$-$C_{10}$ alkyl, optionally in an organic liquid reaction medium and at least a second alkoxy compound (Bx) being the reaction product of a Group 2 metal compound and an alcohol (B) selected from ethylene glycol butyl ether, ethylene glycol hexyl ether, ethylene glycol 2-ethylhexyl ether, propylene glycol n-butyl ether, propylene glycol methyl ether, propylene glycol ethyl ether, propylene glycol n-hexyl ether, and propylene glycol 2-ethylhexyl ether, optionally in an organic liquid reaction medium;

and an internal electron donor or a mixture therefrom or a precursor thereof in an organic liquid reaction medium,
(b2) adding said solution (S1) to at least one compound of a transition metal to produce an emulsion, wherein the dispersed phase of which is in the form of droplets and contains more than 50 mol% of the Group 2 metal in the alkoxy compound,
(c2) agitating the emulsion in order to maintain the droplets of said dispersed phase within said predetermined average size range of 2 to 500 μm,
(d2) solidifying said droplets of the dispersed phase,
(e2) recovering the solidified particles of the olefin polymerisation catalyst component

wherein the internal donors are selected from

i) benzoates of the formula (I)

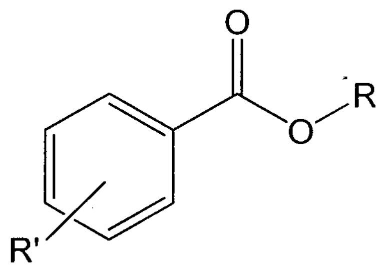

(I)

with R being a linear or branched $C_1$-$C_{12}$-alkyl group, preferably a linear or branched $C_2$-$C_{10}$-alkyl group, more preferably a linear or branched $C_4$-$C_9$-alkyl group and most preferably a branched $C_6$-$C_8$-alkyl group and
R' being H or a linear or branched $C_1$-$C_{12}$-alkyl group, preferably a linear or branched $C_2$-$C_{10}$-alkyl group more preferably a linear or branched $C_4$-$C_8$-alkyl group, whereby the alkyl group can contain one or more heteroatoms selected from O, N or S, preferably O or N, more preferably O, in the alkyl chain, or can be substituted by one or more substituents selected from =O, halogen, like chlorine, fluorine or bromine, or optionally substituted $C_6$-$C_{14}$-aryl,

ii) alkylene glycol dibenzoates selected from the group consisting of ethylene glycol dibenzoate, 1,2-propylene glycol dibenzoate and 1,3-propylene glycol dibenzoate,
iii) maleates of formula (III)

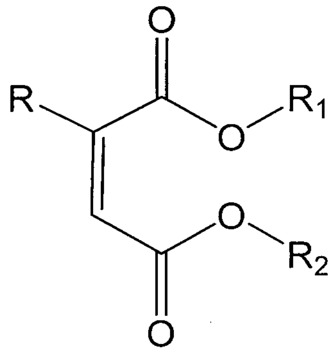

(III)

with $R_1$ and $R_2$ being the same or different and being a linear or branched $C_1$-$C_8$-alkyl group, more preferably a linear or branched $C_1$-$C_4$-alkyl group and most preferably ethyl, whereby $R_1$ and $R_2$ are preferably the same and
with R being H or a linear, branched or cyclic $C_3$ to $C_{12}$-alkyl, preferably a branched or cyclic $C_3$ to $C_8$-alkyl,

iv) 1,3-diethers of formula (V) or (VI)

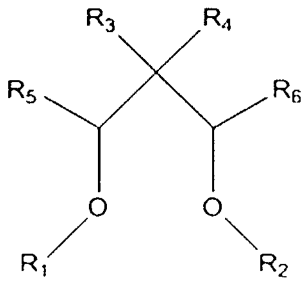

(V) or

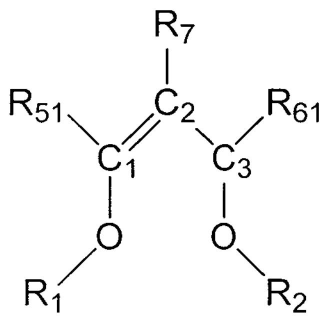

(VI)

wherein in formula (V) and (VI)
$R_1$ and $R_2$ are the same or different and can be a linear or branched $C_1$-$C_{12}$-alkyl, or $R_1$ with $R_5$ and/or $R_2$ with $R_6$ can form a ring with 4 to 6 C-atoms,
$R_3$ and $R_4$ of formula (V) are the same or different and can be H or a linear or branched $C_1$-$C_{12}$-alkyl or $R_3$ and $R_4$ can form together a ring with 5 to 10 C-atoms, which can be part of an aliphatic or aromatic polycyclic ring system with 9 to 20 C atoms,
$R_5$ and $R_6$ in formula (V) are the same or different and can be H or a linear or branched $C_1$-$C_{12}$-alkyl or can form together an aliphatic ring with 5 to 8 C-atoms,

and $R_{51}$, $R_{61}$ and $R_7$ in formula (VI) are the same or different and can be H or a linear or branched $C_1$-$C_{12}$-alkyl or two or three of $R_{51}$, $R_{61}$ and $R_7$ can form together with $C_1$ to $C_3$ an aromatic ring or ring system with 6 to 14 C-atoms, preferably 10 to 14 C-atoms.

**5.** Process according to claim 4, **characterized in that** it is carried out continuously.

**6.** Process according to any one of the preceding claims, wherein in step a1) or a2) a solution of an alkoxy compound mixture according to $a_1$) is used wherein the alcohols (A) and (B) are employed in a mole ratio of from 6:1 to 1:6, preferably 5:1 to 1:5 and more preferably 4:1 to 1:4.

**7.** Process according to any preceding claim, wherein said Group 2 metal is magnesium.

**8.** Process according to any preceding claim, wherein said transition metal is a Group 4 metal and/or Group 5 metal, preferably Ti.

**9.** Particles of the catalyst component obtainable according to any of claims 1 to 8.

**10.** An olefin polymerisation catalyst comprising particles of the catalyst component according to claim 1 or 9 and a co-catalyst, preferably an alkyl aluminum co-catalyst and optionally an external electron donor.

**11.** Use of the catalyst as defined in claim 10 for polymerising olefins, in particular $C_2$ to $C_{10}$ $\alpha$-olefins, preferably ethylene or propylene, optionally with co-monomers, selected from $C_2$ to $C_{12}$ monomers.

**Patentansprüche**

**1.** Verfahren zur Herstellung einer Olefin-PolymerisationsKatalysator-Komponente in Form von festen Teilchen, umfassend die Schritte von

(a1)

(a1-1) Bereitstellen einer Lösung (S1) von mindestens einer ersten Alkoxy-Verbindung (Ax), die das Reaktionsprodukt einer Metall-Verbindung der Gruppe 2 und eines Alkohol-Gemisches aus einem einwertigen Alkohol (A) der Formel ROH, worin R $C_6$-$C_{10}$-Alkyl ist, und einem Alkohol (B), ausgewählt aus Ethylenglykol-butylether, Ethylenglykol-hexylether, Ethylenglykol-2-ethylhexylether, Propylenglykol-n-butylether, Propylenglykol-methylether, Propylenglykol-ethylether, Propylenglykol-n-hexylether und Propylenglykol-2-ethylhexylether, ist, gegebenenfalls in einem organischen flüssigen Reaktionsmedium; oder
(a1-2) Bereitstellen einer Lösung (S1) eines Alkoxy-Verbindungs-Gemisches aus mindestens einer ersten Alkoxy-Verbindung (Ax), die das Reaktionsprodukt einer Metall-Verbindung der Gruppe 2 und eines einwertigen Alkohols (A) der Formel ROH, worin R $C_6$-$C_{10}$-Alkyl ist, gegebenenfalls in einem organischen flüssigen Reaktionsmedium und mindestens einer zweiten Alkoxy-Verbindung (Bx), die das Reaktionsprodukt einer Metall-Verbindung der Gruppe 2 und eines Alkohols (B), ausgewählt aus Ethylenglykol-butylether, Ethylenglykol-hexylether, Ethylenglykol-2-ethylhexylether, Propylenglykol-n-butylether, Propylenglykol-methylether, Propylenglykolethylether, Propylenglykol-n-hexylether und Propylenglykol-2-ethylhexylether, ist, gegebenenfalls in einem organischen flüssigen Reaktionsmedium; und einen inneren Elektronendonor oder ein Gemisch davon oder eine entsprechende Vorstufe davon in einem organischen flüssigen Reaktionsmedium (OM1),

(b1) Kombinieren der Lösung (S1) mit mindestens einer Übergangsmetall-Verbindung (CT), und
(c1) Ausfällen der Katalysator-Komponente in Form eines festen Teilchens und
(d1) Rückgewinnung der verfestigten Teilchen der Olefin-Polymerisations-Katalysator-Komponente,

wobei die inneren Donoren ausgewählt sind aus

i) Benzoaten der Formel (I)

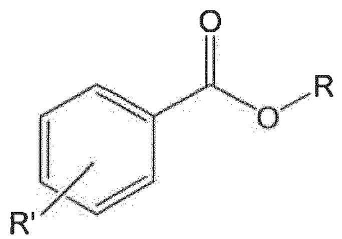
(I)

worin R eine lineare oder verzweigte $C_1$-$C_{12}$-Alkylgruppe, vorzugsweise eine lineare oder verzweigte $C_2$-$C_{10}$-Alkylgruppe, bevorzugter eine lineare oder verzweigte $C_4$-$C_9$-Alkylgruppe und besonders bevorzugt eine verzweigte $C_6$-$C_8$-Alkylgruppe ist und
R' H oder eine lineare oder verzweigte $C_1$-$C_{12}$-Alkylgruppe, vorzugsweise eine lineare oder verzweigte $C_2$-$C_{10}$-Alkylgruppe, bevorzugter eine lineare oder verzweigte $C_4$-$C_8$-Alkylgruppe ist, wobei die Alkylgruppe ein oder mehrere Heteroatome, ausgewählt aus O, N oder S, vorzugsweise O oder N, bevorzugter O, in der Alkylkette enthalten kann, oder mit einem oder mehreren Substituenten, ausgewählt aus =O, Halogen, wie Chlor, Fluor oder Brom, oder gegebenenfalls substituiertem $C_6$-$C_{14}$-Aryl, substituiert sein kann,

ii) Alkylenglykol-dibenzoaten, ausgewählt aus der Gruppe, bestehend aus Ethylenglykol-dibenzoat, 1,2-Propylenglykol-dibenzoat und 1,3-Propylenglykoldibenzoat,
iii) Maleaten der Formel (III)

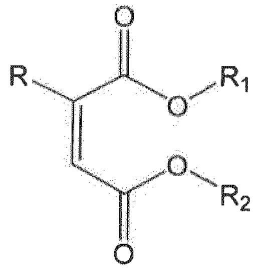

(III)

worin $R_1$ und $R_2$ gleich oder verschieden sind und eine lineare oder verzweigte $C_1$-$C_8$-Alkylgruppe, bevorzugter eine lineare oder verzweigte $C_1$-$C_4$-Alkylgruppe und besonders bevorzugt Ethyl sind, wobei $R_1$ und $R_2$ vorzugsweise gleich sind und
wobei R H oder ein lineares, verzweigtes oder cyclisches $C_3$- bis $C_{12}$-Alkyl, vorzugsweise ein verzweigtes oder cyclisches $C_3$-bis Cs-Alkyl, ist,

iv) 1,3-Diethern der Formel (V) oder (VI)

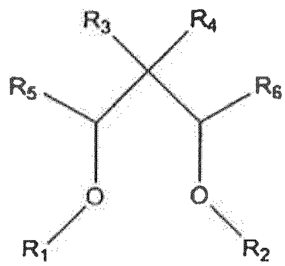

(V) oder

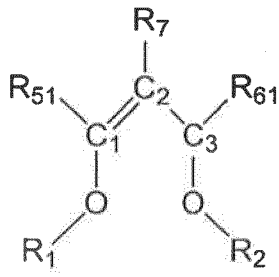

(VI)

worin in Formel (V) und (VI)
$R_1$ und $R_2$ gleich oder verschieden sind und ein lineares oder verzweigtes $C_1$-$C_{12}$-Alkyl sein können, oder $R_1$ mit $R_5$ und/oder $R_2$ mit $R_6$ einen Ring mit 4 bis 6 C-Atomen bilden können,
$R_3$ und $R_4$ der Formel (V) gleich oder verschieden sind und H oder ein lineares oder verzweigtes $C_1$-$C_{12}$-Alkyl sein können oder $R_3$ und $R_4$ zusammen einen Ring mit 5 bis 10 C-Atomen bilden können, der Teil eines aliphatischen oder aromatischen polycyclischen Ringsystems mit 9 bis 20 C-Atomen sein kann, $R_5$ und $R_6$ in Formel (V) gleich oder verschieden sind und H oder ein lineares oder verzweigtes $C_1$-$C_{12}$-Alkyl sein können oder zusammen einen aliphatischen Ring mit 5 bis 8 C-Atomen bilden können,

und $R_{51}$, $R_{61}$ und $R_7$ in Formel (VI) gleich oder verschieden sind und H oder ein lineares oder verzweigtes $C_1$-$C_{12}$-Alkyl sein können oder zwei oder drei von $R_{51}$, $R_{61}$ und $R_7$ zusammen mit $C_1$ bis $C_3$ einen aromatischen Ring oder Ringsystem mit 6 bis 14 C-Atomen, vorzugsweise 10 bis 14 C-Atomen, bilden können.

**2.** Verfahren nach Anspruch 1, wobei die Zugabe von Lösung (S1) zu der mindestens einen Übergangsmetall-Verbindung (CT) in Schritt (b1) bei einem Temperaturbereich von 50 bis 110°C erfolgt, bei dem die mindestens eine Übergangsmetall-Verbindung (CT) in flüssiger Form vorliegt, was zur Fällung der festen Katalysator-Komponenten führt, wobei ein Tensid in Schritt (a1) oder Schritt (b1) zugegeben werden kann.

**3.** Verfahren nach Anspruch 1, wobei die Lösung (S1) mit mindestens einer Übergangsmetall-Verbindung (CT) in flüssiger Form bei einer Temperatur von etwa -20°C bis etwa 30°C gemischt wird und die festen Katalysator-Komponenten durch anschließendes langsames Anheben der Temperatur auf einen Temperaturbereich von 50 bis 110°C ausgefällt werden, wobei die Geschwindigkeit des Temperaturanstiegs im Bereich von 0,1°C bis 30°C pro Minute, vorzugsweise 0,5 bis 10°C pro Minute, liegt und wobei der Lösung (S1) vor Schritt (b1) ein Tensid zugesetzt wird.

**4.** Verfahren zur Herstellung einer Olefin-Polymerisations-Katalysator-Komponente in Form von festen Teilchen, umfassend die Schritte von

(a2)

(a2-1) Bereitstellen einer Lösung (S1) von mindestens einer ersten Alkoxy-Verbindung (Ax), die das Reaktionsprodukt einer Metall-Verbindung der Gruppe 2 und eines Alkohol-Gemisches aus einem einwertigen Alkohol (A) der Formel ROH, wobei R $C_6$-$C_{10}$-Alkyl ist, und einem Alkohol (B), ausgewählt aus Ethylenglykolbutylether, Ethylenglykol-hexylether, Ethylenglykol-2-ethylhexylether, Propylenglykol-n-butylether, Propylenglykol-methylether, Propylenglykol-ethylether, Propylenglykol-n-hexylether und Propylenglykol-2-ethylhexylether, ist, gegebenenfalls in einem organischen flüssigen Reaktionsmedium; oder
(a2-2) Bereitstellen einer Lösung (S1) eines Alkoxy-Verbindungs-Gemisches aus mindestens einer ersten Alkoxy-Verbindung (Ax), die das Reaktionsprodukt einer Metall-Verbindung der Gruppe 2 und eines einwertigen Alkohols (A) der Formel ROH, wobei R $C_6$-$C_{10}$-Alkyl ist, gegebenenfalls in einem organischen flüssigen Reaktionsmedium und mindestens einer zweiten Alkoxy-Verbindung (Bx), die das Reaktionsprodukt einer Metall-Verbindung der Gruppe 2 und eines Alkohols (B), ausgewählt aus Ethylenglykolbutylether, Ethylenglykol-hexylether, Ethylenglykol-2-ethylhexylether, Propylenglykol-n-butylether, Propylenglykol-methylether, Propylenglykol-ethylether, Propylenglykol-n-hexylether und Propylenglykol-2-ethylhexylether, ist, gegebenenfalls in einem organischen flüssigen Reaktionsmedium;

und einen inneren Elektronendonor oder ein Gemisch davon oder eine Vorstufe davon in einem organischen flüssigen Reaktionsmedium,
(b2) Zugabe der Lösung (S1) zu mindestens einer Verbindung eines Übergangsmetalls zur Herstellung einer Emulsion, wobei die dispergierte Phase davon in Form von Tröpfchen vorliegt und mehr als 50 Mol-% des Metalls der Gruppe 2 in der Alkoxy-Verbindung enthält,
(c2) Rühren der Emulsion, um die Tröpfchen der dispergierten Phase innerhalb des vorbestimmten durchschnittlichen Größenbereichs von 2 bis 500 μm zu halten,
(d2) Verfestigen der Tröpfchen der dispergierten Phase,
(e2) Rückgewinnung der verfestigten Teilchen der Olefin-Polymerisations-Katalysator-Komponente

wobei die inneren Donoren ausgewählt sind aus

i) Benzoaten der Formel (I)

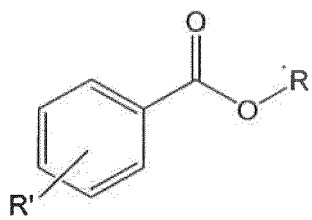
(I)

worin R eine lineare oder verzweigte $C_1$-$C_{12}$-Alkylgruppe, vorzugsweise eine lineare oder verzweigte $C_2$-$C_{10}$-Alkylgruppe, bevorzugter eine lineare oder verzweigte $C_4$-$C_9$-Alkylgruppe und besonders bevorzugt eine verzweigte $C_6$-$C_8$-Alkylgruppe ist und
R' H oder eine lineare oder verzweigte $C_1$-$C_{12}$-Alkylgruppe, vorzugsweise eine lineare oder verzweigte $C_2$-$C_{10}$-Alkylgruppe, bevorzugter eine lineare oder verzweigte $C_4$-$C_8$-Alkylgruppe ist, wobei die Alkylgruppe ein oder mehrere Heteroatome, ausgewählt aus O, N oder S, vorzugsweise O oder N, bevorzugter O, in der Alkylkette enthalten kann, oder mit einem oder mehreren Substituenten, ausgewählt aus =O, Halogen, wie Chlor, Fluor oder Brom, oder gegebenenfalls substituiertem $C_6$-$C_{14}$-Aryl, substituiert sein kann,

ii) Alkylenglykol-dibenzoaten, ausgewählt aus der Gruppe, bestehend aus Ethylenglykol-dibenzoat, 1,2-Propylenglykol-dibenzoat und 1,3-Propylenglykoldibenzoat,
iii) Maleaten der Formel (III)

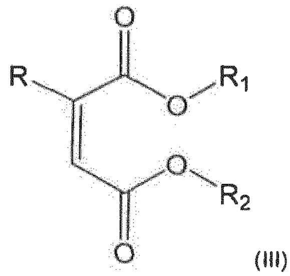

(III)

worin $R_1$ und $R_2$ gleich oder verschieden sind und eine lineare oder verzweigte $C_1$-$C_8$-Alkylgruppe, bevorzugter eine lineare oder verzweigte $C_1$-$C_4$-Alkylgruppe und besonders bevorzugt Ethyl sind, wobei $R_1$ und $R_2$ vorzugsweise gleich sind und
wobei R H oder ein lineares, verzweigtes oder cyclisches $C_3$- bis $C_{12}$-Alkyl, vorzugsweise ein verzweigtes oder cyclisches $C_3$- bis $C_8$-Alkyl ist,

iv) 1,3-Diethern der Formel (V) oder (VI)

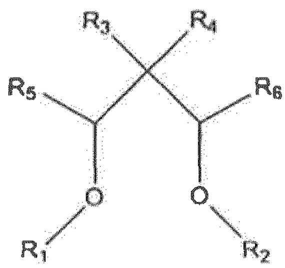

(V) oder

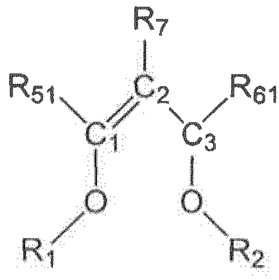

(VI)

worin in Formel (V) und (VI)
$R_1$ und $R_2$ gleich oder verschieden sind und ein lineares oder verzweigtes $C_1$-$C_{12}$-Alkyl sein können, oder $R_1$ mit $R_5$ und/oder $R_2$ mit $R_6$ einen Ring mit 4 bis 6 C-Atomen bilden können,
$R_3$ und $R_4$ der Formel (V) gleich oder verschieden sind und H oder ein lineares oder verzweigtes $C_1$-$C_{12}$-Alkyl sein können oder $R_3$ und $R_4$ zusammen einen Ring mit 5 bis 10 C-Atomen bilden können, der Teil eines aliphatischen oder aromatischen polycyclischen Ringsystems mit 9 bis 20 C-Atomen sein kann, $R_5$ und $R_6$ in Formel (V) gleich oder verschieden sind und H oder ein lineares oder verzweigtes $C_1$-$C_{12}$-Alkyl sein können oder zusammen einen aliphatischen Ring mit 5 bis 8 C-Atomen bilden können,

und $R_{51}$, $R_{61}$ und $R_7$ in Formel (VI) gleich oder verschieden sind und H oder ein lineares oder verzweigtes $C_1$-$C_{12}$-Alkyl sein können oder zwei oder drei von $R_{51}$, $R_{61}$ und $R_7$ zusammen mit $C_1$ bis $C_3$ einen aromatischen Ring oder Ringsystem mit 6 bis 14 C-Atomen, vorzugsweise 10 bis 14 C-Atomen, bilden können.

**5.** Verfahren nach Anspruch 4, **dadurch gekennzeichnet, dass** es kontinuierlich durchgeführt wird.

**6.** Verfahren nach einem der vorangehenden Ansprüche, wobei in Schritt a1) oder a2) eine Lösung eines Alkoxy-Verbindungs-Gemisches nach $a_1$) verwendet wird, wobei die Alkohole (A) und (B) in einem Molverhältnis von 6:1 bis 1:6, vorzugsweise 5:1 bis 1:5 und besonders bevorzugt 4:1 bis 1:4 eingesetzt werden.

**7.** Verfahren nach einem vorangehenden Anspruch, wobei das Metall der Gruppe 2 Magnesium ist.

**8.** Verfahren nach einem vorangehenden Anspruch, wobei das Übergangsmetall ein Metall der Gruppe 4 und/oder ein Metall der Gruppe 5, vorzugsweise Ti, ist.

**9.** Teilchen der Katalysator-Komponente, die nach einem der Ansprüche 1 bis 8 erhältlich sind.

**10.** Olefin-Polymerisations-Katalysator, umfassend Teilchen der Katalysator-Komponente nach Anspruch 1 oder 9 und einen Co-Katalysator, vorzugsweise einen Alkyl-Aluminium-Co-Katalysator und gegebenenfalls einen äußeren Elektronendonor.

**11.** Verwendung des Katalysators nach Anspruch 10 zur Polymerisation von Olefinen, insbesondere $C_2$ bis $C_{10}$ α-Olefinen, vorzugsweise Ethylen oder Propylen, gegebenenfalls mit Co-Monomeren, ausgewählt aus $C_2$- bis $C_{12}$-Monomeren.

## Revendications

**1.** Procédé pour la préparation d'un composant de catalyseur de polymérisation d'oléfines sous la forme de particules solides, comprenant les étapes suivantes :

(a1)

(a1-1) obtention d'une solution (S1) d'au moins un premier composé alcoxy (Ax) qui est le produit de la réaction d'un composé d'un métal du Groupe 2 et d'un mélange d'alcools constitué d'un alcool monovalent (A) de formule ROH dans laquelle R est un alkyle en $C_6$ à $C_{10}$ et d'un alcool (B) choisi parmi l'éther butylique d'éthylèneglycol, l'éther hexylique d'éthylèneglycol, l'éther 2-éthylhexylique d'éthylèneglycol, l'éther n-butylique de propylèneglycol, l'éther méthylique de propylèneglycol, l'éther éthylique de propylèneglycol, l'éther n-hexylique de propylèneglycol, et l'éther 2-éthylhexylique de propylèneglycol, éventuellement dans un milieu réactionnel liquide organique ; ou
(a1-2) obtention d'une solution (S1) d'un mélange de composés alcoxy constitué d'au moins un premier composé alcoxy (Ax) qui est le produit de la réaction d'un composé d'un métal du Groupe 2 et d'un alcool monovalent (A) de formule ROH dans laquelle R est un alkyle en $C_6$ à $C_{10}$, éventuellement dans un milieu réactionnel liquide, et d'au moins un deuxième composé alcoxy (Bx) qui est le produit de la réaction d'un composé d'un métal du Groupe 2 et d'un alcool (B) choisi parmi l'éther butylique d'éthylèneglycol, l'éther hexylique d'éthylèneglycol, l'éther 2-éthylhexylique d'éthylèneglycol, l'éther n-butylique de propylèneglycol, l'éther méthylique de propylèneglycol, l'éther éthylique de propylèneglycol, l'éther n-hexylique de propylèneglycol, et l'éther 2-éthylhexylique de propylèneglycol, éventuellement dans un milieu réactionnel liquide organique ;

et d'un donneur d'électron interne ou d'un mélange de tels donneurs ou d'un précurseur correspondant d'un tel donneur dans un milieu réactionnel liquide (OM1),
(b1) combinaison de ladite solution (S1) avec au moins un composé de métal de transition (CT), et
(c1) précipitation dudit composant de catalyseur sous la forme de particules solides, et
(d1) récupération des particules solidifiées du composant de catalyseur de polymérisation d'oléfines,

dans lequel les donneurs internes sont choisis parmi

i) les benzoates de formule (I)

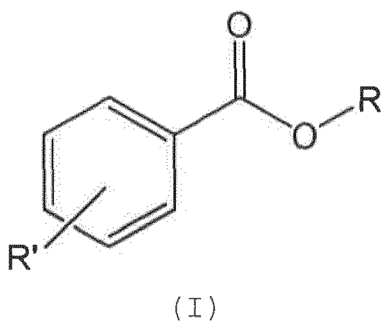

(I)

dans laquelle R est un groupe alkyle en $C_1$ à $C_{12}$ linéaire ou ramifié, de préférence un groupe alkyle en $C_2$ à $C_{10}$ linéaire ou ramifié, plus préférablement un groupe alkyle en $C_4$ à $C_9$ linéaire ou ramifié, et le plus préférablement un groupe alkyle en $C_6$ à $C_8$ ramifié, et
R' est H ou un groupe alkyle en $C_1$ à $C_{12}$ linéaire ou ramifié, de préférence un groupe alkyle en $C_2$ à $C_{10}$ linéaire ou ramifié, plus préférablement un groupe alkyle en $C_4$ à $C_8$ linéaire ou ramifié, lequel groupe alkyle peut contenir un ou plusieurs hétéroatomes choisis parmi O, N ou S, de préférence parmi O ou N, plus préférablement O, dans la chaîne alkyle, ou peut être substitué par un ou plusieurs substituants choisis

parmi =O, un halogène, tel que le chlore, le fluor ou le brome, ou un aryle en $C_6$ à $C_{14}$ éventuellement substitué,

ii) les dibenzoates d'alkylèneglycol choisis dans l'ensemble constitué par le dibenzoate d'éthylèneglycol, le dibenzoate de 1,2-propylèneglycol et le dibenzoate de 1,3-propylèneglycol,
iii) les maléates de formule (III)

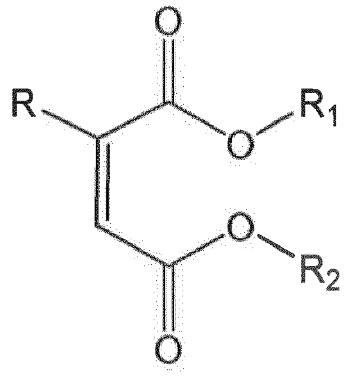

(III)

dans laquelle $R_1$ et $R_2$ sont identiques ou différents et sont un groupe alkyle en $C_1$ à $C_8$ linéaire ou ramifié, plus préférablement un groupe alkyle en $C_1$ à $C_4$ linéaire ou ramifié et le plus préférablement éthyle, $R_1$ et $R_2$ étant de préférence identiques, et
R est H ou un groupe alkyle en $C_3$ à $C_{12}$ linéaire, ramifié ou cyclique, de préférence un groupe alkyle en $C_3$ à Cs ramifié ou cyclique,

iv) les 1,3-diéthers de formule (V) ou (VI)

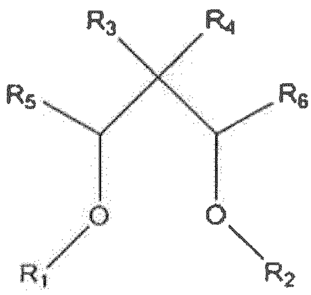 (V) ou 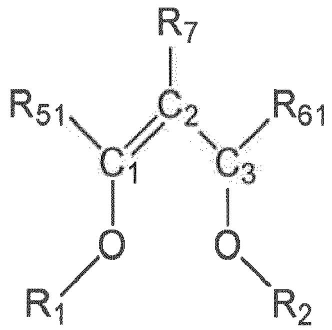 (VI)

où, dans les formules (V) et (VI)
$R_1$ et $R_2$ sont identiques ou différents et sont un groupe alkyle en $C_1$ à $C_{12}$ linéaire ou ramifié, ou bien $R_1$ avec $R_5$ et/ou $R_2$ avec $R_6$ peuvent former un cycle possédant 4 à 6 atomes C,
$R_3$ et $R_4$ dans la formule (V) sont identiques ou différents et peuvent être H ou un groupe alkyle en $C_1$ à $C_{12}$ linéaire ou ramifié, ou bien $R_3$ et $R_4$ peuvent former ensemble un cycle possédant 5 à 10 atomes C, qui peut faire partie d'un système polycyclique aliphatique ou aromatique possédant 9 à 20 atomes C,
$R_5$ et $R_6$ dans la formule (V) sont identiques ou différents et peuvent être H ou un groupe alkyle en $C_1$ à $C_{12}$ linéaire ou ramifié, ou bien ils peuvent former un ensemble un cycle aliphatique possédant 5 à 8 atomes C,
et $R_{51}$, $R_{61}$ et $R_7$ dans la formule (VI) sont identiques ou différents et peuvent être H ou un groupe alkyle en $C_1$ à $C_{12}$ linéaire ou ramifié, ou bien deux ou trois parmi $R_{51}$, $R_{61}$ et $R_7$ peuvent former, conjointement avec $C_1$ à $C_3$, un cycle ou un système cyclique aromatique possédant 6 à 14 atomes C, de préférence 10 à 14 atomes C.

**2.** Procédé selon la revendication 1, dans lequel l'addition de la solution (S1) à l'au moins un composé de métal de transition (CT) dans l'étape (b1) est effectuée à une température située dans la plage allant de 50 à 110°C, température à laquelle l'au moins un composé de métal de transition (CT) est sous une forme liquide, avec pour résultat la précipitation desdits composants de catalyseur solides, et dans lequel un tensioactif peut être ajouté dans l'étape (a1) ou l'étape (b1).

**3.** Procédé selon la revendication 1, dans lequel la solution (S1) est mélangée avec au moins un composé de métal de transition (CT) sous forme liquide à une température d'environ -20°C à environ 30°C et les composants de catalyseur solides sont précipités par élévation lente subséquente de la température jusqu'à une température située dans la plage allant de 50 à 110°C, la vitesse de montée en température étant située dans la plage allant de 0,1°C à 30°C par minute, de préférence de 0,5 à 10°C par minute, et dans lequel un tensioactif est ajouté à la solution (S1) avant l'étape (b1).

**4.** Procédé pour la préparation d'un composant de catalyseur de polymérisation d'oléfines sous la forme de particules solides, comprenant les étapes suivantes :

(a2)

(a2-1) obtention d'une solution (S1) d'au moins un premier composé alcoxy (Ax) qui est le produit de la réaction d'un composé d'un métal du Groupe 2 et d'un mélange d'alcools constitué d'un alcool monovalent (A) de formule ROH dans laquelle R est un alkyle en $C_6$ à $C_{10}$ et d'un alcool (B) choisi parmi l'éther butylique d'éthylèneglycol, l'éther hexylique d'éthylèneglycol, l'éther 2-éthylhexylique d'éthylèneglycol, l'éther n-butylique de propylèneglycol, l'éther méthylique de propylèneglycol, l'éther éthylique de propylèneglycol, l'éther n-hexylique de propylèneglycol, et l'éther 2-éthylhexylique de propylèneglycol, éventuellement dans un milieu réactionnel liquide organique ; ou
(a2-2) obtention d'une solution (S1) d'un mélange de composés alcoxy constitué d'au moins un premier composé alcoxy (Ax) qui est le produit de la réaction d'un composé d'un métal du Groupe 2 et d'un alcool monovalent (A) de formule ROH dans laquelle R est un alkyle en $C_6$ à $C_{10}$, éventuellement dans un milieu réactionnel liquide organique, et d'au moins un deuxième composé alcoxy (Bx) qui est le produit de la réaction d'un composé d'un métal du Groupe 2 et d'un alcool (B) choisi parmi l'éther butylique d'éthylèneglycol, l'éther hexylique d'éthylèneglycol, l'éther 2-éthylhexylique d'éthylèneglycol, l'éther n-butylique de propylèneglycol, l'éther méthylique de propylèneglycol, l'éther éthylique de propylèneglycol, l'éther n-hexylique de propylèneglycol, et l'éther 2-éthylhexylique de propylèneglycol, éventuellement dans un milieu réactionnel liquide organique ;

et d'un donneur d'électron interne ou d'un mélange de tels donneurs ou d'un précurseur d'un tel donneur dans un milieu réactionnel liquide organique,
(b2) addition de ladite solution (S1) à au moins un composé d'un métal de transition pour produire une émulsion dont la phase dispersée est sous la forme de gouttelettes et contient plus de 50 % en moles du métal du Groupe 2 dans le composé alcoxy,
(c2) agitation de l'émulsion afin que les gouttelettes de ladite phase dispersées soient maintenues dans la plage de taille moyenne prédéterminée allant de 2 à 500 μm,
(d2) solidification desdites gouttelettes de la phase dispersée,
(e2) récupération des particules solidifiées du composant de catalyseur de polymérisation d'oléfines,

dans lequel les donneurs internes sont choisis parmi

i) les benzoates de formule (I)

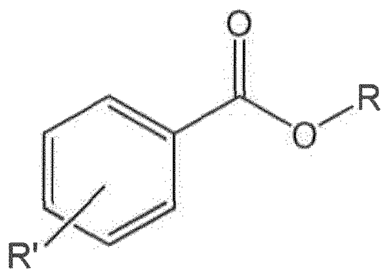

(I)

dans laquelle R est un groupe alkyle en $C_1$ à $C_{12}$ linéaire ou ramifié, de préférence un groupe alkyle en $C_2$ à $C_{10}$ linéaire ou ramifié, plus préférablement un groupe alkyle en $C_4$ à $C_9$ linéaire ou ramifié, et le plus préférablement un groupe alkyle en $C_6$ à $C_8$ ramifié, et
R' est H ou un groupe alkyle en $C_1$ à $C_{12}$ linéaire ou ramifié, de préférence un groupe alkyle en $C_2$ à $C_{10}$ linéaire ou ramifié, plus préférablement un groupe alkyle en $C_4$ à $C_8$ linéaire ou ramifié, lequel groupe alkyle peut contenir un ou plusieurs hétéroatomes choisis parmi O, N ou S, de préférence parmi O ou N, plus préférablement O, dans la chaîne alkyle, ou peut être substitué par un ou plusieurs substituants choisis parmi =O, un halogène, tel que le chlore, le fluor ou le brome, ou un aryle en $C_6$ à $C_{14}$ éventuellement substitué,

ii) les dibenzoates d'alkylèneglycol choisis dans l'ensemble constitué par le dibenzoate d'éthylèneglycol, le dibenzoate de 1,2-propylèneglycol et le dibenzoate de 1,3-propylèneglycol,
iii) les maléates de formule (III)

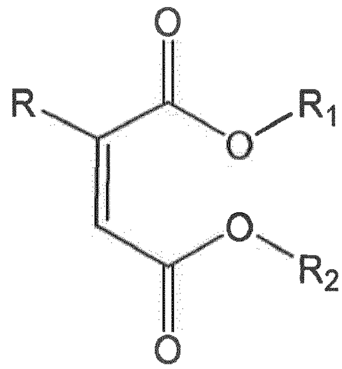

(III)

dans laquelle $R_1$ et $R_2$ sont identiques ou différents et sont un groupe alkyle en $C_1$ à $C_8$ linéaire ou ramifié, plus préférablement un groupe alkyle en $C_1$ à $C_4$ linéaire ou ramifié et le plus préférablement éthyle, $R_1$ et $R_2$ étant de préférence identiques, et
R est H ou un groupe alkyle en $C_3$ à $C_{12}$ linéaire, ramifié ou cyclique, de préférence un groupe alkyle en $C_3$ à $C_8$ ramifié ou cyclique,

iv) les 1,3-diéthers de formule (V) ou (VI)

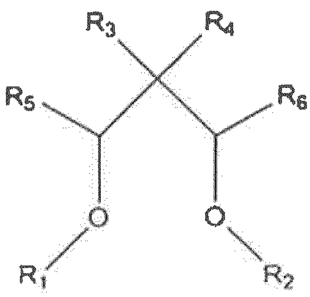

(V) ou

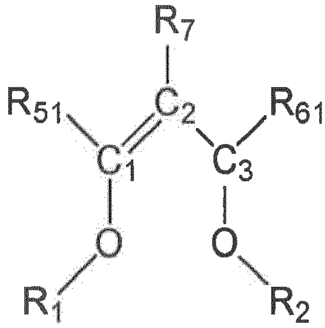

(VI)

où, dans les formules (V) et (VI)
$R_1$ et $R_2$ sont identiques ou différents et sont un groupe alkyle en $C_1$ à $C_{12}$ linéaire ou ramifié, ou bien $R_1$ avec $R_5$ et/ou $R_2$ avec $R_6$ peuvent former un cycle possédant 4 à 6 atomes C,
$R_3$ et $R_4$ dans la formule (V) sont identiques ou différents et peuvent être H ou un groupe alkyle en $C_1$ à $C_{12}$ linéaire ou ramifié, ou bien $R_3$ et $R_4$ peuvent former ensemble un cycle possédant 5 à 10 atomes C, qui peut faire partie d'un système polycyclique aliphatique ou aromatique possédant 9 à 20 atomes C,
$R_5$ et $R_6$ dans la formule (V) sont identiques ou différents et peuvent être H ou un groupe alkyle en $C_1$ à $C_{12}$ linéaire ou ramifié, ou bien ils peuvent former ensemble un cycle aliphatique possédant 5 à 8 atomes C,
et $R_{51}$, $R_{61}$ et $R_7$ dans la formule (VI) sont identiques ou différents et peuvent être H ou un groupe alkyle

en $C_1$ à $C_{12}$ linéaire ou ramifié, ou bien deux ou trois parmi $R_{51}$, $R_{61}$ et $R_7$ peuvent former, conjointement avec $C_1$ à $C_3$, un cycle ou un système cyclique aromatique possédant 6 à 14 atomes C, de préférence 10 à 14 atomes C.

**5.** Procédé selon la revendication 4, **caractérisé en ce qu'**il est mis en oeuvre en continu.

**6.** Procédé selon l'une quelconque des revendications précédentes, dans lequel, dans l'étape a1) ou a2), une solution d'un mélange de composés alcoxy selon $a_1$) est utilisé, où les alcools (A) et (B) sont employés en un rapport en moles de 6/1 à 1/6, de préférence de 5/1 à 1/5 et plus préférablement de 4/1 à 1/4.

**7.** Procédé selon l'une quelconque des revendications précédentes, dans lequel ledit métal du Groupe 2 est le magnésium.

**8.** Procédé selon l'une quelconque des revendications précédentes, dans lequel ledit métal de transition est un métal du Groupe 4 et/ou un métal du Groupe 5, de préférence Ti.

**9.** Particules du composant de catalyseur pouvant être obtenu selon l'une quelconque des revendications 1 à 8.

**10.** Catalyseur de polymérisation d'oléfines comprenant des particules du composant de catalyseur selon la revendication 1 ou 9 et un cocatalyseur, de préférence un cocatalyseur alkyl-aluminium et éventuellement un donneur d'électron externe.

**11.** Utilisation du catalyseur tel que défini dans la revendication 10 pour polymériser des oléfines, en particulier des $\alpha$-oléfines en $C_2$ à $C_{10}$, de préférence l'éthylène ou le propylène, éventuellement avec des comonomères, choisis parmi les monomères en $C_2$ à $C_{12}$.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 0155230 A
- EP 713886 A
- EP 856013 A
- WO 0008073 A
- WO 0008074 A
- EP 926165 A
- US 20050176900 A
- WO 03000757 A
- WO 03000754 A
- WO 2004029112 A
- EP 1862480 A
- EP 1862481 A
- EP 1489110 A